# EUROPEAN PATENT SPECIFICATION

(11) **EP 2 318 676 B1**
(45) Date of publication and mention of the grant of the patent: **30.11.2011**
(21) Application number: 09786252.8
(22) Date of filing: 07.08.2009
(51) Int. Cl.: F01N 5/02, F28D 15/02, F01P 3/22

(54) **EXHAUST HEAT RECOVERY SYSTEM**
ABGASWÄRMERÜCKGEWINNUNGSSYSTEM
SYSTÈME DE RÉCUPÉRATION DE CHALEUR D'ÉCHAPPEMENT

(30) Priority: 08.08.2008 JP 2008205285; 23.06.2009 JP 2009148818
(43) Date of publication of application: 11.05.2011
(73) Proprietor: Toyota Jidosha Kabushiki Kaisha, Toyota-shi, Aichi 471-8571 (JP)
(72) Inventor: TOI, Masao, Toyota-shi Aichi-ken 471-8571 (JP); KOMITSU, Hideyuki, Toyota-shi Aichi-ken 471-8571 (JP); MURATA, Toshio, Toyota-shi Aichi-ken 471-8571 (JP)
(74) Representative: Albutt, Anthony John
(86) International application number: PCT/IB2009/006842
(87) International publication number: WO 2010/015940

(56) References cited:
- DE-A1- 4 340 463
- DE-A1-102007 015 533
- JP-A- 2008 014 304
- JP-U- 63 022 321
- US-A1- 2005 204 733

## Description

### BACKGROUND OF THE INVENTION

### 1. Field of the Invention

The invention relates to an exhaust heat recovery system that is able to accelerate an increase in temperature of a portion to be heated in a vehicle, such as an automobile, using exhaust heat of an internal combustion engine.

### 2. Description of the Related Art

It is known that heat of exhaust gas from an internal combustion engine mounted on a vehicle, such as an automobile, is recovered by a heat pipe and is used, for example, to facilitate activation of a catalyst and to accelerate the internal combustion engine to warm up. (see Japanese Utility Model Application Publication No. 63-22321 (JP-U-63-22321) and Japanese Patent Application Publication No. 2008-14304 (JP-A-2008-14304)).

JP-U-63-22321 describes a configuration that one end of the heat pipe is connected to an exhaust passage of the internal combustion engine at a portion downstream of a catalytic device to serve as a heating portion (corresponding to a heat receiving unit), the other end of the heat pipe is connected to the exhaust passage at a portion upstream of the catalytic device to serve as a cooling portion (corresponding to a heat radiating unit) and then exhaust gas upstream of the catalytic device is heated to increase its temperature to indirectly increase the temperature of the catalytic device.

The heat pipe is hermetically sealed and filled with working fluid, such as pure water, in the inner space and heats one end thereof to vaporize the working fluid to feed the working fluid to the other end. Then the heat pipe causes the vaporized working, fluid to radiate heat to condense at the other end, and is returned back to the one end.

JP-A-2008-14304 describes an exhaust heat recovery system. The exhaust heat recovery system includes a vaporizing portion (corresponding to a heat receiving unit) and a condensing portion (corresponding to a heat radiating unit). The vaporizing portion recovers exhaust heat in the exhaust passage of the internal combustion engine to vaporize working fluid. The condensing portion condenses the vaporized working fluid. The vaporizing portion and the condensing portion are integrally connected in a state where they are arranged next to each other to form a closed loop. Part of a coolant passage of the internal combustion engine is arranged adjacent to the condensing portion to exchange heat between the coolant and the gaseous working fluid.

In this example, a loop heat pipe, in which the vaporizing portion and the condensing portion are integrated next to each other is used, and the vaporizing portion is arranged so as to cross the exhaust passage.

Other than the above, Japanese Utility Model Application Publication No. 2-76508 (JP-U-2-76508) is, for example, known in which a heat receiving unit and condensing portion (corresponding to a heat radiating unit) of a loop heat pipe are arranged away from each other. JP-U-2-76508 describes a configuration that the heat receiving unit of the loop heat pipe is provided in the exhaust passage of the internal combustion engine at a portion downstream of a catalyst, and the condensing portion of the loop heat pipe is provided near a heater core of a hot-air heater installed midway of a coolant passage that once delivers the coolant of the internal combustion engine and then returns the coolant back.

Documents DE 102 007 015 533 and US 2005/0204733 disclose further heat pipe systems.

The above exhaust heat recovery system includes only any one of the heat pipe for increasing the temperature of the catalyst provided in the exhaust passage of the internal combustion engine or the heat pipe for increasing the temperature of the coolant of the internal combustion engine, and there is no exhaust heat recovery system that includes both.

### SUMMARY OF THE INVENTION

The invention is able to, where necessary, execute a process of accelerating an increase in temperature of a catalyst provided in an exhaust passage of an internal combustion engine and a process of accelerating an increase in temperature of coolant of the internal combustion engine.

A first aspect of the invention relates to an exhaust heat recovery system. The exhaust heat recovery system includes: a first loop heat pipe that recovers exhaust heat downstream of a first catalyst in an exhaust passage of an internal combustion engine and that exchanges heat with the first catalyst; and a second loop heat pipe that recovers heat of the first catalyst and that exchanges heat with coolant that is once delivered from the internal combustion engine.

With the above configuration, it is possible to recover exhaust heat by the first loop heat pipe to heat the catalyst from the outside to thereby accelerate an increase in temperature of the catalyst, and it is possible to recover heat of the catalyst by the second loop heat pipe to cool the catalyst while accelerating an increase in temperature of the coolant of the internal combustion engine.

In this way, it is possible to efficiently increase the temperature of the catalyst attached to the internal combustion engine and to efficiently increase the temperature of the coolant of the internal combustion engine.

The first loop heat pipe may include a first heat receiving unit that vaporizes working fluid, which is hermetically sealed and filled inside the first heat receiving unit, by exhaust heat downstream of the first catalyst in the exhaust passage, a first heat radiating unit that is attached in an upstream region in the first catalyst and that causes heat exchange between working fluid, transferred from the first heat receiving unit, and the first catalyst to condense the working fluid, a first transfer pipe that is used to transfer working fluid from the first heat receiving unit to the first heat radiating unit, and a first return pipe that is used to return working fluid from the first heat radiating unit to the first heat receiving unit, and wherein the second loop heat pipe may include a second heat receiving unit that is attached in a downstream region in the first catalyst and that vaporizes working fluid, which is hermetically sealed and filled inside the second heat receiving unit, by heat of the first catalyst, a second heat radiating unit that causes heat exchange between working fluid, transferred from the second heat receiving unit, and coolant, once delivered from the internal combustion engine, to condense the working fluid, a second transfer pipe that is used to transfer working fluid from the second heat receiving unit to the second heat radiating unit, and a second return pipe that is used to return working fluid from the second heat radiating unit to the second heat receiving unit.

Here, the configuration of each of the first and second loop heat pipes is specified, and it becomes easy to implement the exhaust heat recovery system through this specification.

A first valve device may be provided for the first return pipe or the first transfer pipe, and a second valve device is provided for the second return pipe or the second transfer pipe.

With the above configuration, it is possible to circulate heat or stop heat circulation by the first loop heat pipe by opening or closing the first valve device. In addition, it is possible to circulate heat or stop heat circulation by the second loop heat pipe by opening or closing the second valve device. Therefore, for example, when it is necessary to warm up the catalyst, it is possible to preferentially warm up the catalyst with exhaust heat using the first loop heat pipe only. In addition, for example, when the catalyst has been warmed up and then it is necessary to warm up the internal combustion engine, only the second loop heat pipe is used to make it possible to recover heat of the catalyst to cool the catalyst while accelerating an increase in temperature of the coolant of the internal combustion engine.

Note that in a state where the first and second valve devices are provided for the first and second return pipes, as the first and second valve devices are closed, working fluid condensed in the first and second heat radiating units cannot be returned to the first and second heat receiving units. Thus, heat circulation is stopped by the first and second loop heat pipes. In addition, in a state where the first and second valve devices are provided for the first and second transfer pipes, as the first and second valve devices are closed, working fluid vaporized in the first and second heat receiving units cannot be transferred to the first and second heat radiating units. Thus, heat circulation is stopped by the first and second loop heat pipes.

A communication passage may be connected to the first heat radiating unit and the second heat receiving unit, and a third valve device may be provided in the communication passage.

With the above configuration, as the third valve device is closed, the first heat radiating unit and the second heat receiving unit function as separate heat exchange portions, while, as the third valve device is opened, the first heat radiating unit and the second heat radiating unit function as a single large-volume heat exchange portion.

For example, when it is necessary to warm up the catalyst, as heat is circulated using the first loop heat pipe only and the third valve device is closed, it is possible to heat the upstream region in the catalyst with exhaust heat. In addition, for example, when the catalyst has been warmed up and then it is necessary to warm up the internal combustion engine, as heat is circulated using only the second loop heat pipe and the third valve device is opened, heat of the entire region in the catalyst may be recovered to cool the catalyst while accelerating an increase in temperature of the coolant of the internal combustion engine.

The exhaust heat recovery system may further include a controller that controls the opening degrees of the first, second and third valve devices by actuators, wherein, when it is determined that it is necessary to activate the first catalyst, the controller may open the first valve device and close the second and third valve devices, and, when it is determined that it is necessary to heat the coolant in a state where the first catalyst is activated, the controller may close the first valve device and open the second and third valve devices.

With the above configuration, the opening and closing of the first to third valve devices may be controlled by the controller at appropriate timings. By opening or closing the first to third valve devices on the basis of the coolant temperature of the internal combustion engine and the temperature of the catalyst, it is possible to optimally use the first loop heat pipe and the second loop heat pipe.

For example, when the temperature of the catalyst is increased to an activation temperature, heat is circulated using the first loop heat pipe only to make it possible to preferentially warm up the catalyst with exhaust heat. In addition, when the catalyst has been warmed up and then it is necessary to warm up the internal combustion engine, heat is circulated using the second loop heat pipe only to make it possible to cool the catalyst while accelerating an increase in temperature of the coolant of the internal combustion engine with heat of the catalyst.

When it is determined that the temperature of the first catalyst has not reached an upper limit temperature in a state where the first catalyst is activated and it is determined that the temperature of the coolant has not reached an upper limit temperature in a state where the coolant has been warmed up, the controller may close the first valve device and open the second and third valve devices, and, when it is determined that the temperature of the first catalyst has reached the upper limit temperature and it is determined that the temperature of the coolant has reached the upper limit temperature, the controller may close the first and second valve devices and open the third valve device.

In this case, furthermore, under the condition that the temperature of the catalyst or the coolant temperature of the internal combustion engine tends to excessively increase, heat circulation using the first and second loop heat pipes is stopped. By so doing, it is possible to prevent a decrease in function due to excessive heating of the catalyst and overheating of the internal combustion engine.

A first valve device may be provided for the first return pipe or the first transfer pipe, a bypass pipe that bypasses the second heat radiating unit may be connected to the second transfer pipe and the second return pipe, and a switching valve may be provided at a portion at which the bypass pipe is connected to the second transfer pipe and may be used to switch between a heat exchange route from the second transfer pipe toward the second heat radiating unit and a bypass route from the second transfer pipe toward the bypass pipe.

With the above configuration, it is possible to circulate heat or stop heat circulation in the first loop heat pipe by opening or closing the first valve device. In addition, as the heat exchange route is secured by the switching valve, it is possible to circulate heat using the second loop heat pipe, while, as the bypass route is secured by the switching valve, it is possible to stop heat circulation using the second loop heat pipe. Therefore, for example, when it is necessary to warm up the catalyst, it is possible to preferentially warm up the catalyst with exhaust heat using the first loop heat pipe only. In addition, for example, when the catalyst has been warmed up and then it is necessary to warm up the coolant of the internal combustion engine, only the second loop heat pipe is used to make it possible to recover heat of the catalyst to cool the catalyst while accelerating an increase in temperature of the coolant of the internal combustion engine.

The exhaust heat recovery system may include a controller that controls the opening degree of the first valve device by an actuator, wherein the switching valve may be a three-way valve, the controller may control the switching valve by an actuator for switching, when it is determined that it is necessary to activate the first catalyst, the controller may open the first valve device and secure the bypass route by the switching valve, when it is determined that it is necessary to heat the coolant in a state where the first catalyst is activated, the controller may close the first valve device and secure the heat exchange route by the switching valve, and, when it is determined that the temperature of the coolant has reached an upper limit temperature, the controller may close the first valve device and secure the bypass route by the switching valve.

With the above configuration, the opening and closing of the first valve device and the switching of the switching valve may be controlled by the controller at appropriate timings. By controlling the first valve device and the switching valve on the basis of the coolant temperature of the internal combustion engine and the temperature of the catalyst, it is possible to optimally use the first loop heat pipe and the second loop heat pipe.

A communication passage may be connected to the first heat radiating unit and the second heat receiving unit, and a third valve device may be provided in the communication passage.

With the above configuration, as the third valve device is closed, the first heat radiating unit and the second heat receiving unit function as separate heat exchange portions, while, as the third valve device is opened, the first heat radiating unit and the second heat radiating unit function as a single large-volume heat exchange portion.

For example, when it is necessary to warm up the catalyst, as heat is circulated using the first loop heat pipe only and the third valve device is closed, it is possible to heat the upstream region in the catalyst with exhaust heat. In addition, for example, when the catalyst has been warmed up and then it is necessary to warm up the internal combustion engine, as heat is circulated using the second loop heat pipe only and the third valve device is opened, heat may be recovered from the entire region in the catalyst to heat the coolant of the internal combustion engine. As the heat is recovered from the catalyst, the catalyst is cooled.

The exhaust heat recovery system may include a controller that controls the opening degrees of the first and third valve devices by actuators, wherein the switching valve may be a three-way valve, the controller may control the switching valve by an actuator for switching, when it is determined that it is necessary to activate the first catalyst, the controller may open the first valve device, close the third valve device and secure the bypass route by the switching valve, when it is determined that it is necessary to heat the coolant in a state where the first catalyst is activated, the controller may close the first valve device, open the third valve device and secure the heat exchange route by the switching valve, and when it is determined that the temperature of the coolant has reached an upper limit temperature, the controller may close the first valve device, open the third valve device and secure the bypass route by the switching valve.

With the above configuration, the operations of the first valve device, switching valve and third valve device may be controlled by the controller at appropriate timings. By controlling the first valve device, the switching valve and the third valve device on the basis of the coolant temperature of the internal combustion engine and the temperature of the catalyst, it is possible to optimally use the first loop heat pipe and the second loop heat pipe.

For example, when the temperature of the catalyst is increased to an activation temperature, heat is circulated using the first loop heat pipe only to make it possible to preferentially warm up the catalyst with exhaust heat. In addition, when the catalyst has been warmed up and then it is necessary to warm up the coolant of the internal combustion engine, heat is circulated using the second loop heat pipe only to make it possible to cool the catalyst while accelerating an increase in temperature of the coolant of the internal combustion engine with heat of the catalyst.

In this case, furthermore, under the condition that the temperature of the catalyst or the coolant temperature of the internal combustion engine tends to excessively increase, heat circulation using the first and second loop heat pipes is stopped. By so doing, it is possible to prevent a decrease in function due to excessive heating of the catalyst and overheating of the internal combustion engine.

The first valve device to the third valve device each may be of a self-actuated type that automatically controls its opening degree in accordance with a predetermined actuating condition.

Then, the self-actuated first valve device may open when a condition that it is necessary to activate the first catalyst is satisfied, while the self-actuated first valve device may close when a condition that it is necessary to heat the coolant is satisfied in a state where the first catalyst is activated

In addition, the self-actuated second valve device may close when a condition that it is necessary to activate the first catalyst is satisfied, while the self-actuated second valve device may open when a condition that the first catalyst is activated is satisfied. Alternatively, the second valve device may close when a condition that it is necessary to activate the first catalyst is satisfied or when it is determined that the temperature of the coolant has reached an upper limit temperature, while the second valve device may open when a condition that it is necessary to heat the coolant is satisfied in a state where the first catalyst is activated.

Furthermore, the self-actuated third valve device may close when a condition that it is necessary to activate the first catalyst is satisfied, while the self-actuated third valve device may open when a condition that it is necessary to heat the coolant is satisfied in a state where the first catalyst is activated or when a condition that the temperature of the coolant has reached an upper limit temperature is satisfied.

In this way, when the first valve device to the third valve device each are of a self-actuated type, a control system (for example, control programs, wires, and the like) for the first valve device to the third valve device is unnecessary, so it is advantageous in reducing facility costs.

The first heat radiating unit may include a first hollow sleeve that is provided so as to surround an upstream region in the first catalyst and that has an inner annular space, wherein the first transfer pipe and the first return pipe may be connected to the inner annular space and may be in fluid communication with the inner annular space, and a radially outward-directed fin that is provided on an inner peripheral wall of the first hollow sleeve, wherein the second heat receiving unit may include a second hollow sleeve that is provided so as to surround a downstream region in the first catalyst and that has an inner annular space, wherein the second transfer pipe and the second return pipe are connected to the inner annular space and are in fluid communication with the inner annular space, and a radially outward-directed fin that is provided on an inner peripheral wall of the second hollow sleeve, and wherein both the first and second hollow sleeves may be connected next to each other in an axial direction thereof at a connecting portion at which the communication passage is provided.

Here, the outer shape of each of the first heat radiating unit and the second heat receiving unit is an annular shape so as to surround the catalyst, and it is possible to efficiently transfer heat to the catalyst and efficiently recover heat of the catalyst through this specification.

A vibration transmission damping portion may be provided at a location adjacent to the internal combustion engine in the exhaust passage, and the second heat radiating unit may be attached in a region from the vibration transmission damping portion to the first catalyst.

Here, in short, vibrations transferred from the internal combustion engine to the exhaust passage are damped by the vibration transmission damping portion. Thus, the heat receiving units of the first and second loop heat pipes are provided in a region downstream of the vibration transmission damping portion in the exhaust passage.

This means that, as the region downstream of the vibration transmission damping portion in the exhaust passage vibrates, the heat receiving units of the first and second loop heat pipes and the heat radiating units all substantially synchronously move, so bending stress due to the vibrations tends to be applied to the proximal portions of the transfer pipes and return pipes that are connected to and are in fluid communication with the heat receiving units and heat radiating units.

Thus, it is possible to achieve long service life, for example, such that the first and second loop heat pipes undergo temporal fatigue breaking. Here, when the bending stress is applied, it is necessary to take measures that the thickness or outer diameter of each of the transfer pipes and the return pipes is increased to enhance rigidity or the transfer pipes and the return pipes are formed of a flexible pipe. However, when the above vibration transmission damping portion is provided, such measures need not be taken.

The exhaust heat recovery system according to the aspect of the invention is able to, where necessary, carry out a process of accelerating an increase in temperature of the catalyst provided in the exhaust passage of the internal combustion engine and a process of accelerating an increase in temperature of the coolant of the internal combustion engine.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a schematic configuration diagram that shows an exhaust heat recovery system according to a first embodiment of the invention;
FIG. 2 is a cross-sectional view that shows a spherical joint shown in FIG. 1;
FIG. 3 is a cross-sectional view that shows the specific configuration of the exhaust heat recovery system of FIG 1;
FIG 4 is a flowchart used to illustrate the operation of the exhaust heat recovery system of FIG 1;
FIG. 5 is a schematic configuration diagram that shows an exhaust heat recovery system according to another embodiment of the invention;
FIG. 6A and FIG 6B are cross-sectional views that show the specific configuration of a second valve device shown in FIG 5;
FIG. 7 is a schematic configuration diagram that shows an exhaust heat recovery system according to a second embodiment of the invention;
FIG. 8A, FIG. 8B and FIG. 8C are cross-sectional views that show the specific configuration of a second valve device shown in FIG. 7;
FIG. 9 is a flowchart used to illustrate the operation of the exhaust heat recovery system of FIG 7;
FIG. 10 is a schematic configuration diagram that shows an exhaust heat recovery system according to a third embodiment of the invention; and
FIG. 11 is a flowchart used to illustrate the operation of the exhaust heat recovery system of FIG. 10.

### DETAILED DESCRIPTION OF EMBODIMENTS

### First Embodiment

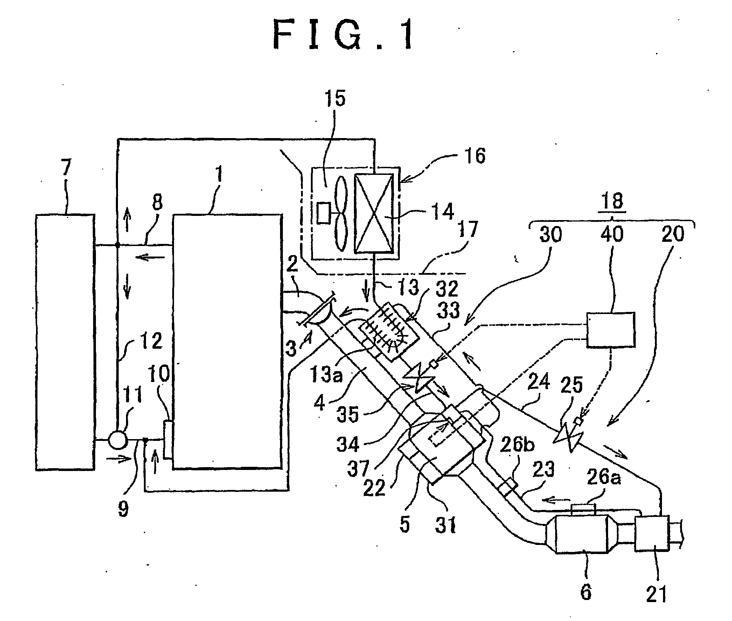

FIG. 1 to FIG. 4 show the first embodiment of the invention. The first embodiment describes an example of an exhaust heat recovery system applied to an internal combustion engine mounted on a vehicle.

The schematic configuration of the exhaust heat recovery system will be described with reference to FIG. 1. In the drawing, a water-cooled internal combustion engine 1 supplies an air-fuel mixture to a combustion chamber of the internal combustion engine 1 to burn, and then discharges exhaust gas in the combustion chamber from an exhaust system to the atmosphere. The air-fuel mixture is obtained by mixing air, supplied from an intake system, with fuel, supplied from a fuel supply system, at an appropriate air-fuel ratio.

The exhaust system at least includes an exhaust manifold 2 and an exhaust pipe 4. The exhaust manifold 2 is installed to the internal combustion engine 1. The exhaust pipe 4 is connected to the exhaust manifold 2 via a spherical joint 3. The exhaust manifold 2 and the exhaust pipe 4 form an exhaust passage.

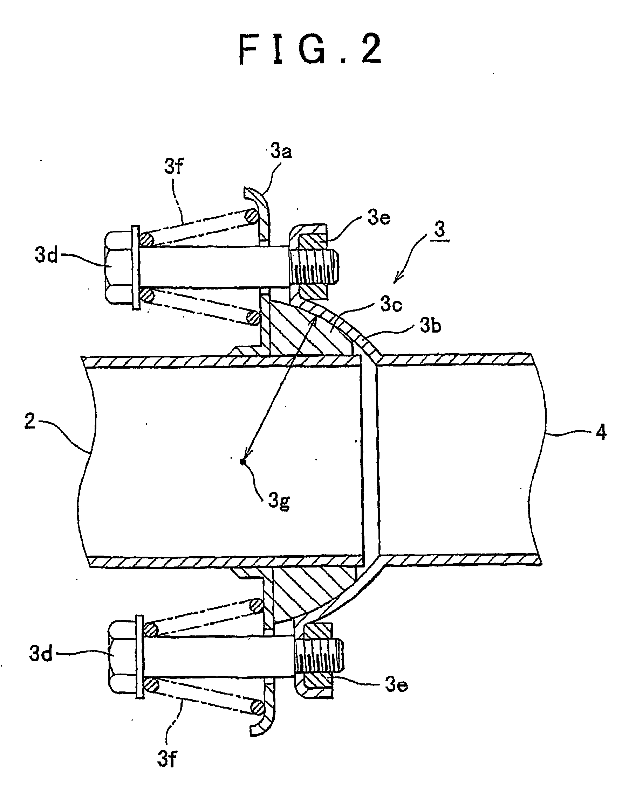

As shown in FIG. 2, the spherical joint 3 includes a flat flange 3a, a semi-spherical flange 3b, a gasket 3c, bolts 3d and nuts 3e, and coil springs 3f. The flat flange 3a is directed radially outward and is provided at a downstream open end of the exhaust manifold 2. The semi-spherical flange 3b is provided at an upstream open end of the exhaust pipe 4. The gasket 3c is held between the flat flange 3a and the semi-spherical flange 3b. The bolts 3d and the nuts 3e are used to fasten the flat flange 3a to the semi-spherical flange 3b. The coil springs 3f are interposed in a compressed state between the bolts 3d and the flat flange 3a.

One side of the gasket 3c, which contacts the flat flange 3a, is formed in a planar shape, and the other side of the gasket 3c, which contacts the inner surface of the semi-spherical flange 3b, is formed in a semi-spherical shape that follows the shape of the inner surface of the semi-spherical flange 3b. The gasket 3c seals a contact surface with the flat flange 3a and a contact surface with the semi-spherical flange 3b by the elastic restoring forces of the coil springs 3f. When an external force is applied to cause the exhaust manifold 2 and the exhaust pipe 4 to pivot about a pivot center 3g, the gasket 3c and the semi-spherical flange 3b slide on each other to allow the pivot naturally. That is, the spherical joint 3 blocks transmission of vibrations and movement of the internal combustion engine 1 to the exhaust pipe 4, or damps the vibrations and movement and then transmits the vibrations and movement. Thus, the spherical joint 3 may be regarded as a vibration transmission damping portion.

Two catalysts 5 and 6 are serially provided for the exhaust pipe 4. Exhaust gas is purified by these two catalysts 5 and 6.

Between these catalysts 5 and 6, the catalyst 5 provided upstream in a direction in which exhaust gas flows in the exhaust pipe 4 is a so-called start catalyst (S/C) and is termed an upstream catalyst, while the catalyst 6 provided downstream in the direction in which exhaust gas flows in the exhaust pipe 4 is a so-called main catalyst (M/C) or underfloor catalyst (U/F) and is termed a downstream catalyst.

These catalysts 5 and 6 each may be, for example, a three-way catalyst. The three-way catalyst exhibits purification action in which carbon monoxide (CO), hydrocarbons (HC) and nitrogen oxides (NOx) are collectively changed into harmless components by a chemical reaction.

Refrigerant (hereinafter, simply referred to as coolant) called long life coolant (LLC) is filled inside the internal combustion engine 1. The refrigerant is once delivered from a coolant delivery passage 8 and supplied to a radiator 7, and is then returned from the radiator 7 back to the internal combustion engine 1 via a coolant return passage 9. The radiator 7 cools coolant, circulated by a water pump 10, through heat exchange with outside air.

Then, the flow rate of the coolant that flows through the radiator 7 and the flow rate of the coolant that flows through a bypass passage 12 are adjusted by a thermostat 11. For example, when the engine is being warmed up, the flow rate of the coolant in the bypass passage 12 is increased to facilitate the engine to warm up, and to prevent overcooling of the coolant by the radiator 7.

A heater core 14 is provided midway of a heater passage 13. The heater passage 13 is branched from the coolant delivery passage 8 and is connected to an upstream side of the water pump 10 in the coolant return passage 9. The heater core 14 is a heat source for heating a vehicle cabin using the coolant. Air heated by the heater core 14 is introduced into the vehicle cabin 17 by a blower fan 15. Note that a hot-air heater 16 is formed of the heater core 14 and the blower fan 15. The temperature of the coolant that flows in a region downstream of the heater core 14 in the heater passage 13 becomes low because of heat radiation from the heater core 14.

The thus configured exhaust system of the internal combustion engine 1 is equipped with an exhaust heat recovery system 18.

The exhaust heat recovery system 18, for example, recovers heat of exhaust gas exhausted from the internal combustion engine 1 to make it possible to accelerate an increase in temperature of the upstream catalyst 5 or recovers heat of the upstream catalyst 5 to accelerate an increase in temperature of the coolant returned from the heater core 14 to the internal combustion engine 1. The exhaust heat recovery system 18 mainly includes two loop heat pipes 20 and 30 and a controller 40.

The first loop heat pipe 20 mainly includes a first heat receiving unit 21, a first heat radiating unit 22, a first transfer pipe 23, a first return pipe 24, and a first valve device 25. The second loop heat pipe 30 mainly includes a second heat receiving unit 31, a second heat radiating unit 32, a second transfer pipe 33, a second return pipe 34, and a second valve device 35.

Working fluid is filled inside the entire sloop heat pipes 20 and 30 in a vacuumed state. The working fluid is, for example, pure water, or the like. The boiling point of water is 100°C at 1 atmospheric pressure; however, the pressures in the loop heat pipes 20 and 30 are reduced (for example, 0.01 atmospheric pressure), so the boiling point is, for example, 5 to 10°C. Note that the working fluid may be, for example, an alcohol, a fluorocarbon, a chlorofluorocarbon, or the like, other than pure water. In addition, the main components of the loop heat pipes 20 and 30 are, for example, made of a stainless material having high corrosion resistance.

The controller 40, similar to a generally known electronic control unit (ECU), includes a central processing unit (CPU), a program memory (ROM), a data memory (RAM), a backup memory (nonvolatile RAM), and the like, that are connected to one another by a bidirectional bus. The controller 40 at least controls the operation of the exhaust heat recovery system 18.

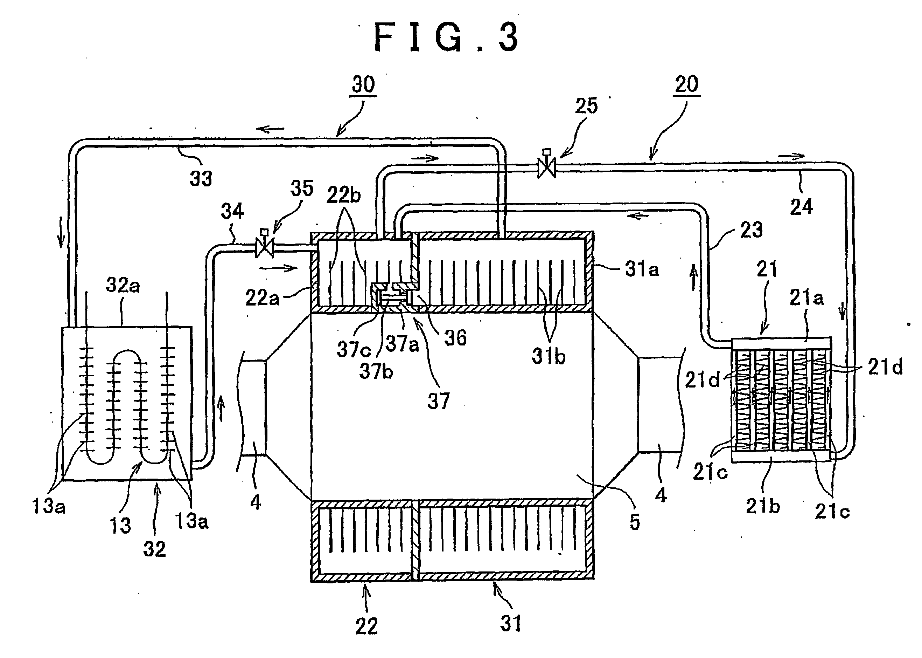

Next, the components of the first loop heat pipe 20 will be described in detail with reference to FIG 3.

The first heat receiving unit 21 is provided downstream of the downstream catalyst 6 in the exhaust pipe 4. The first heat receiving unit 21 is configured to recover heat as heat of vaporization in such a manner that liquid working fluid that is hermetically sealed and filled inside the first heat receiving unit 21 vaporizes with exhaust heat.

Specifically, the heat receiving unit 21 is provided in a direction perpendicular to a direction in which exhaust gas flows through the exhaust pipe 4. The heat receiving unit 21 is formed so that an upper tank 21a and a lower tank 21b are in fluid communication via a plurality of tubes 21c, and fins 21d connected to outer wall surfaces of the tubes 21c are arranged within gaps between the adjacent tubes 21c.

The gaps between the adjacent tubes 21c are flow passages of exhaust gas that flows through the exhaust pipe 4. The fins 21d arranged within these gaps are of a corrugated type so as to increase the area of heat exchange with exhaust gas that passes through the gaps. The corrugated-type fins 21d are, for example, the ones such that a thin belt-like plate material is formed into a corrugated shape by roller working. In short, heat of exhaust gas is absorbed by the fins 21d to heat and vaporize working fluid that flows through the tubes 21c. Thus, the tubes 21c and the fins 21d serve as a heat exchanger.

The first heat radiating unit 22 is attached in an upstream region in the upstream catalyst 5. The upstream catalyst 5 is heated by vaporized working fluid transferred from the first heat receiving unit 21 to condense the working fluid.

Specifically, the first heat radiating unit 22 includes a hollow sleeve 22a and fins 22b. The hollow sleeve 22a surrounds the upstream region in the upstream catalyst 5. The fins 22b are directed radially outward and connected to an inner peripheral wall of the hollow sleeve 22a.

The fins 22b are of a corrugated type so as to increase the area of heat exchange with vaporized working fluid passing though the inner space of the hollow sleeve 22a. The corrugated-type fins 22b are, for example, the ones such that a thin belt-like plate material is formed into a corrugated shape in the circumferential direction by roller working.

The first transfer pipe 23 transfers working fluid, vaporized at the first heat receiving unit 21, to the first heat radiating unit 22. The first transfer pipe 23 is arranged near and along the exhaust passage (the exhaust pipe 4, the upstream catalyst 5 and the downstream catalyst 6) via an appropriate clearance.

Specifically, the first transfer pipe 23 is located away from the exhaust passage (the exhaust pipe 4, the upstream catalyst 5 and the downstream catalyst 6) at a distance that is necessary to maintain a temperature at which vaporized working fluid, transferred through the first transfer pipe 23, does not condense. The distance is desirably obtained through an experiment, or the like, and empirically set on the basis of the overall length of the first transfer pipe 23, material, thickness, facing area, and the like.

In order to implement such arrangement of the first transfer pipe 23, a plurality of portions (two portions in this embodiment) of the first transfer pipe 23 are supported on an outer wall of the downstream catalyst 6 and the exhaust pipe 4 via brackets 26a and 26b, The brackets 26a and 26b are desirably made of a material (for example, stainless steel, or the like) having a high thermal conductivity.

The first return pipe 24 returns working fluid, condensed at the first heat radiating unit 22, to the first heat receiving unit 21. The first return pipe 24, different from the above described first transfer pipe 23, is arranged away from the exhaust passage (the exhaust pipe 4, the upstream catalyst 5 and the downstream catalyst 6) and the first transfer pipe 23 as much as possible so that liquid working fluid flowing through the first return pipe 24 is not vaporized again. In addition, the first return pipe 24 has an appropriate down grade so as to make it easy to return condensed liquid working fluid to the heat receiving unit 21.

Specifically, the first return pipe 24 is located away from the exhaust passage (the exhaust pipe 4, the upstream catalyst 5 and the downstream catalyst 6) at a distance that is necessary to maintain a state where liquid working fluid flowing through the first return pipe 24 is not vaporized again by radiation heat from the exhaust passage. The distance is desirably obtained through an experiment, or the like, and empirically set on the basis of the overall length of the first return pipe 24, material, thickness, facing area, and the like. In addition, the down grade may be, for example, about 6 degrees; however, it may be selected.

The first valve device 25 is provided midway of the first return pipe 24. The first valve device 25 is able to switch between an open state that allows working fluid to flow from the first heat radiating unit 22 to the first heat receiving unit 21 and a closed state that prohibits working fluid from flowing from the first heat radiating unit 22 to the first heat receiving unit 21. The first valve device 25 is, for example, an electromagnetic valve.

Note that it is possible to adjust the amount of working fluid returned from the first heat radiating unit 22 to the first heat receiving unit 21 in such a manner that the controller 40 steplessly controls the opening degree of the first valve device 25.

Next, the components of the second loop heat pipe 30 will be described in detail with reference to FIG. 3.

The second heat receiving unit 31 is attached in a downstream region in the upstream catalyst 5. The second heat receiving unit 31 is configured to recover heat as heat of vaporization in such a manner that liquid working fluid that is hermetically sealed and filled inside the second heat receiving unit 31 vaporizes with heat received from the upstream catalyst 5.

Specifically, the second heat receiving unit 31 includes a hollow sleeve 31a and fins 31b. The hollow sleeve 31a surrounds the downstream region in the upstream catalyst 5. The fins 31b are directed radially outward and connected to an inner peripheral wall of the hollow sleeve 31a. The fins 31b are of a corrugated type so as to increase the area of heat exchange with vaporized working fluid passing though the inner space of the hollow sleeve 31a. The corrugated-type fins 31b are, for example, the ones such that a thin belt-like plate material is formed into a corrugated shape in the circumferential direction by roller working.

The second heat radiating unit 32 is attached near the spherical joint 3 between the upstream catalyst 5 and the spherical joint 3. The coolant that is returned from the heater core 14 to the internal combustion engine 1 is heated by vaporized working fluid, transferred from the second heat receiving unit 31, to condense the working fluid.

Specifically, the second heat radiating unit 32 is formed so that a downstream end of the second transfer pipe 33 and an upstream end of the second return pipe 34 each are connected to a case 32a of which the inside is hermetically sealed. A region downstream of the heater core 14 in the heater passage 13 is inserted in the inner space of the case 32a. Fins 13a are provided on the outer periphery of the region inserted in the case 32a in the heater passage 13 to increase the area of heat exchange. As for operation, in short, as working fluid vaporized at the second heat receiving unit 31 is transferred to the second heat radiating unit 32 via the second transfer pipe 33, heat of the working fluid is absorbed by the fins 13a, and the absorbed heat heats the coolant that flows through the heater passage 13.

The second transfer pipe 33 transfers working fluid, vaporized at the second heat receiving unit 31, to the second heat radiating unit 32. The second return pipe 34 returns working fluid, condensed at the second heat radiating unit 32, to the second heat receiving unit 31.

The second valve device 35 is provided midway of the second return pipe 34. The second valve device 35 is able to switch between an open state that allows working fluid to flow from the second heat radiating unit 32 to the second heat receiving unit 31 and a closed state that prohibits working fluid from flowing from the second heat radiating unit 32 to the second heat receiving unit 31. The second valve device 35 is, for example, an electromagnetic valve.

Note that it is possible to adjust the amount of working fluid returned from the second heat radiating unit 32 to the second heat receiving unit 31 in such a manner that the controller 40 steplessly controls the opening degree of the second valve device 35.

In the first embodiment, as shown in FIG 3, the first heat radiating unit 22 of the first loop heat pipe 20 and the second heat receiving unit 31 of the second loop heat pipe 30 are integrated and arranged side by side in the direction in which exhaust gas flows.

Specifically, the hollow sleeve 22a of the first heat radiating unit 22 and the hollow sleeve 31a of.the second heat receiving unit 31 are connected next to each other in the axial direction. A communication passage 36 is provided at the connected portion, and a third valve device 37 is provided in the communication passage 36.

The third valve device 37 is able to switch between an open state that allows working fluid to flow from the first heat radiating unit 22 to the second heat receiving unit 31 and a closed state that prohibits working fluid from flowing from the first heat radiating unit 22 to the second heat receiving unit 31. The third valve device 37 includes a valve case 37a, a valve element 37b and an actuator 37c serving as a driving source.

Note that the operation of the actuator 37c is controlled by the controller 40. For example, the controller 40 adjusts the amount of working fluid that flows from the first heat radiating unit 22 to the second heat receiving unit 31 by steplessly controlling the opening degree of the third valve device 37.

Next, the operation of the exhaust heat recovery system 18 related to the operation of the internal combustion engine 1 will be simply described.

In short, when the internal combustion engine 1 is cold-started, the temperatures of the upstream catalyst 5, the downstream catalyst 6 and the coolant of the internal combustion engine 1 all are low. However, exhaust gas of, for example, 300 to 400°C is exhausted from the internal combustion engine 1 to the exhaust pipe 4 via the exhaust manifold 2, and the temperatures of the two catalysts 5 and 6 are increased from the inside by exhaust gas, while the coolant is returned to the internal combustion engine 1 via the bypass passage 12 without passing through the radiator 7 to thereby warm up the engine.

Then, when the engine is cold-started, the second loop heat pipe 30 is halted to stop heating the coolant that is returned from the heater core 14 to the internal combustion engine 1, and the function of the first loop heat pipe 20 is enabled. Thus, the upstream catalyst 5 is preferentially heated from the outside by exhaust heat that has passed through the downstream catalyst 6. By so doing, the upstream catalyst 5 is heated from both inner side and outer side, so an increase in temperature of the upstream catalyst 5 is accelerated to early activate the upstream catalyst 5. Note that the temperature of the downstream catalyst 6 is increased by exhaust gas of which the temperature is increased as it is purified by the upstream catalyst 5.

Then, as the temperature of the upstream catalyst 5 is increased to an activation temperature, the first loop heat pipe 20 is halted to stop heating the upstream catalyst 5 by exhaust heat, and the function of the second loop heat pipe 30 is enabled. Thus, heat of the upstream catalyst 5 is recovered to heat the coolant that is returned from the heater core 14 to the internal combustion engine 1. This cools the upstream catalyst 5, while facilitating the internal combustion engine 1 to warm up.

In the first embodiment, control as to whether heat is circulated by the first loop heat pipe 20 of the exhaust heat recovery system 18 is mainly executed by the controller 40 and the first valve device 25, and control as to whether heat is circulated by the second loop heat pipe 30 of the exhaust heat recovery system 18 is mainly executed by the controller 40 and the second valve device 35.

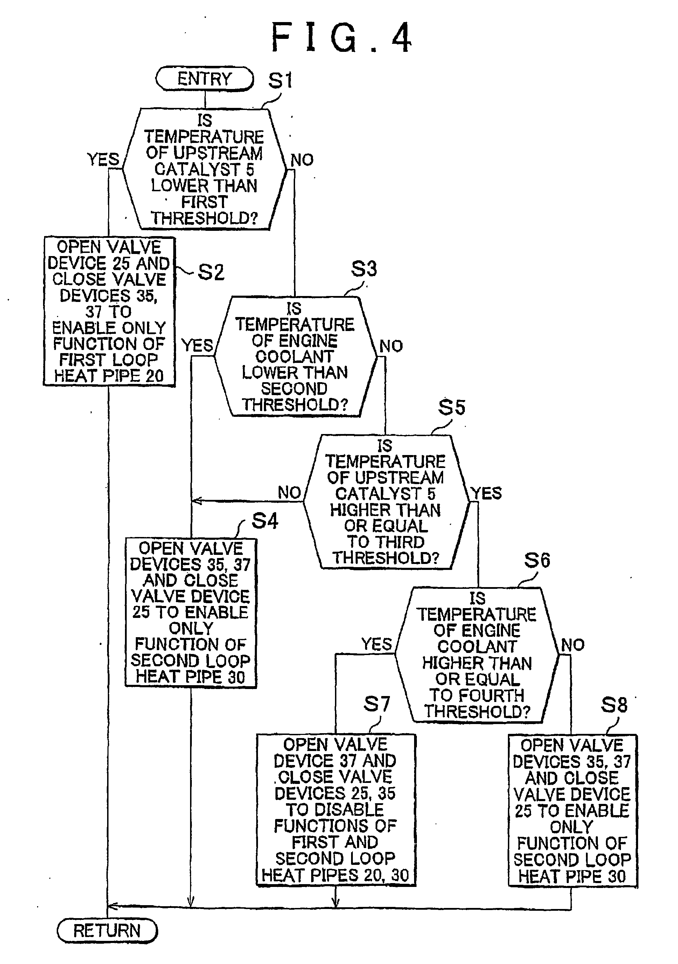

Next, the operation of the exhaust heat recovery system 18 will be described in detail with reference to the flowchart shown in FIG. 4.

The flowchart shown in FIG. 4 is predominantly formed of the operation of the controller 40. As the routine enters the flowchart, it is determined in step S1 whether the temperature Tsc of the upstream catalyst 5 is lower than a first threshold T1. Note that the temperature Tsc of the upstream catalyst 5 may be, for example, recognized on the basis of an output from a sensor (not shown) that detects the catalyst bed temperature of the upstream catalyst 5. In addition, the first threshold T1 is, for example, appropriately set on the basis of the temperature (for example, 300 to 400°C) at which the upstream catalyst 5 is activated.

In short, in step S1, it is checked whether the upstream catalyst 5 is activated, that is, whether it is necessary to warm up the upstream catalyst 5.

Here, when affirmative determination is made in step S1, that is, the temperature Tsc of the upstream catalyst 5 has not reached the activation temperature of the upstream catalyst 5, it is necessary to warm up the upstream catalyst 5 and then the process proceeds to step S2.

In step S2, the first valve device 25 is opened to enable the function of the first loop heat pipe 20, that is, heat is circulated, and the second valve device 35 is closed to disable the function of the second loop heat pipe 30, that is, heat circulation is stopped. Then, the third valve device 37 is closed to shut off fluid communication between the first heat radiating unit 22 and the second heat receiving unit 31.

First, as the first valve device 25 is opened, working fluid is allowed to circulate between the first heat receiving unit 21 and the first heat radiating unit 22. Thus, the function of the first loop heat pipe 20 is enabled. By so doing, exhaust gas exhausted from the internal combustion engine 1 to the exhaust pipe 4 reaches the first heat receiving unit 21 of the first loop heat pipe 20 via the two catalysts 5 and 6, working fluid in the first heat receiving unit 21 is vaporized by heat of the exhaust gas, and then the vaporized working fluid is transferred to the first heat radiating unit 22 via the first transfer pipe 23. At this time, the third valve device 37 is closed to shut off fluid communication between the first heat radiating unit 22 and the second heat receiving unit 31. Thus, the upstream region in the upstream catalyst 5 is heated by the vaporized working fluid in the first heat radiating unit 22. As the working fluid is condensed through this heating, the condensed working fluid is returned to the first heat receiving unit 21 via the first return pipe 24. Note that, as the temperature of the upstream catalyst 5 increases, the temperature of the downstream catalyst 6 located downstream of the upstream catalyst 5 is also increased by the action of purifying exhaust gas.

On the other hand, as the second valve device 35 is closed, working fluid liquefied at the second heat radiating unit 32 cannot be returned back to the second heat receiving unit 31. Thus, working fluid cannot be vaporized at the second heat receiving unit 31. Therefore, vaporized working fluid cannot be transferred from the second heat receiving unit 31 to the second heat radiating unit 32, so the function of the second loop heat pipe 30 is disabled. Thus, heat of the upstream catalyst 5 is not recovered, and an increase in temperature of the upstream catalyst 5 is not prevented.

In such a state, heat of exhaust gas that passes through the first heat receiving unit 21 is recovered, so the volume of the exhaust gas reduces to reduce exhaust noise.

Incidentally, when negative determination is made in step S1, that is, when the temperature Tsc of the upstream catalyst 5 is higher than or equal to the activation temperature of the upstream catalyst 5, it is not necessary to warm up the upstream catalyst 5; rather, it is necessary to cool the upstream catalyst 5 for preventing an excessive increase in temperature, and then the process proceeds to step S3.

In step S3, it is determined whether the temperature Tw of the coolant delivered from the internal combustion engine 1 is lower than a second threshold T2. Note that the coolant temperature Tw may be, for example, recognized on the basis of an output from a coolant temperature sensor (not shown) that detects the temperature of the upstream side of the coolant delivery passage 8 extending from the internal combustion engine 1. In addition, the second threshold T2 may be set at a temperature, for example, 40°C, that is lower than a lower limit temperature of a coolant temperature range (for example, 60 to 80°C) during normal operation after the engine is warmed up, that is, a temperature at which it is necessary to warm up the engine.

In short, in step S3, it is checked whether it is necessary to warm up the internal combustion engine 1.

Here, when affirmative determination is made in step S3, that is, when the coolant temperature Tw is lower than the temperature during normal operation, it is necessary to warm up the internal combustion engine 1, and the process proceeds to step S4.

In step S4, the first valve device 25 is closed to disable the function of the first loop heat pipe 20, that is, to stop heat circulation, and the second valve device 35 is opened to enable the function of the second loop heat pipe 30, that is, to circulate heat. Then, the third valve device 37 is opened to provide fluid communication between the first heat radiating unit 22 and the second heat receiving unit 31.

As the first valve device 25 is closed, working fluid liquefied at the first heat radiating unit 22 cannot be returned back to the first heat receiving unit 21. Thus, working fluid cannot be vaporized at the first heat receiving unit 21. By so doing, vaporized working fluid cannot be transferred, that is, heat cannot be transferred, from the first heat receiving unit 21 to the first heat radiating unit 22, so the function of the first loop heat pipe 20 is disabled.

On the other hand, as the second valve device 35 is opened, working fluid is allowed to circulate between the second heat receiving unit 31 and the second heat radiating unit 32. Thus, the function of the second loop heat pipe 30 is enabled. At this time, the third valve device 37 is opened, so the first heat radiating unit 22 is in fluid communication with the second heat receiving unit 31. Therefore, the first heat radiating unit 22 and the second heat receiving unit 31 are united to function as a single heat receiving heat exchanging unit. Thus, the heat receiving capacity of the second heat receiving unit 31 increases.

In such a state, heat of the upstream catalyst 5 is recovered to heat the coolant that is returned from the heater core 14 to the internal combustion engine 1. Thus, the upstream catalyst 5 is cooled.

On the other hand, when negative determination is made in step S3, that is, when the coolant temperature Tw falls within the temperature range during normal operation, the process proceeds to step S5.

In step S5, it is determined whether the temperature Tsc of the upstream catalyst 5 is higher than or equal to a third threshold T3 that is higher than the first threshold T1. Note that the third threshold T3 is appropriately set, for example, on the basis of the heat-resistant temperature (for example, 800 to 900°C) of the upstream catalyst 5.

In short, in step S5, it is checked whether the temperature of the upstream catalyst 5 is excessively increased.

When negative determination is made in step S5, that is, when the temperature Tsc of the upstream catalyst 5 is not excessively increased, the process proceeds to step S4. That is, during a period since the temperature of the upstream catalyst 5 has reached the activation temperature until the temperature of the upstream catalyst 5 is excessively increased, only the function of the second loop heat pipe 30 is enabled to draw heat away from the upstream catalyst 5.

Incidentally, when affirmative determination is made in step S5, that is, when the temperature Tsc of the upstream catalyst 5 is excessively increased, the process proceeds to step S6, and then it is further determined whether the coolant temperature Tw is higher than or equal to a fourth threshold T4 higher than the second threshold T2.

Note that the fourth threshold T4 is appropriately set within a range that is higher than an upper limit temperature of a coolant temperature range (for example, 60 to 80°C) during normal operation and lower than an overheating temperature (for example, 110°C). In this way, the reason why the fourth threshold T4 is not set at the overheating temperature but at a value lower than the overheating temperature is to provide a temporal margin before overheating.

In short, in step S6, it is checked whether the coolant of the internal combustion engine 1 tends to overheat.

When affirmative determination is made in step S6, the temperature Tsc of the upstream catalyst 5 is excessively increased, and the coolant temperature Tw is excessively increased. Thus, the process proceeds to step S7 in order to stop warming up the upstream catalyst 5 and stop warming up the coolant.

In step S7, the first valve device 25 is closed to disable the function of the first loop heat pipe 20, that is, to stop heat circulation, and the second valve device 35 is closed to disable the function of the second loop heat pipe 30, that is, to stop heat circulation, and then the third valve device 37 is opened to provide fluid communication between the first heat radiating unit 22 and the second heat receiving unit 31.

First, as the first valve device 25 is closed, working fluid liquefied at the first heat radiating unit 22 cannot be returned back to the first heat receiving unit 21. Thus, working fluid is not vaporized at the first heat receiving unit 21. By so doing, vaporized working fluid cannot be transferred from the first heat receiving unit 21 to the first heat radiating unit 22, so the function of the first loop heat pipe 20 is disabled.

In addition, as the second valve device 35 is closed, working fluid liquefied at the second heat radiating unit 32 cannot be returned back to the second heat receiving unit 31. Thus, working fluid is not vaporized at the second heat receiving unit 31. Therefore, vaporized working fluid cannot be transferred from the second heat receiving unit 31 to the second heat radiating unit 32, so the function of the second loop heat pipe 30 is disabled.

In addition, the third valve device 37 is opened, so the first heat radiating unit 22 is in fluid communication with the second heat receiving unit 31. As a result, part of working fluid in the first heat radiating unit 22 flows into the second heat receiving unit 31, and the working fluid is vaporized at both the first heat radiating unit 22 and the second heat receiving unit 31. Thus, the working fluid is transferred to the second heat radiating unit 32 and stored. Therefore, the second valve device 35 is desirably closed after the third valve device 37 is opened.

As the above state is achieved, heating of the upstream catalyst 5 and heating of the coolant returned from the heater core 14 to the internal combustion engine 1 are stopped.

On the other hand, when negative determination is made in step S6, the temperature Tsc of the upstream catalyst 5 is excessively increased; however, the coolant temperature Tw is not excessively increased. Thus, it is not necessary to warm up the coolant, and the process proceeds to step S8.

In step S8, the first valve device 25 is closed to disable the function of the first loop heat pipe 20, that is, to stop heat circulation, and the second valve device 35 is opened to enable the function of the second loop heat pipe 30, that is, to circulate heat. Then, the third valve device 37 is opened to provide fluid communication between the first heat radiating unit 22 and the second heat receiving unit 31.

First, as the first valve device 25 is closed, working fluid liquefied at the first heat radiating unit 22 cannot be returned back to the first heat receiving unit 21. Thus, working fluid is not vaporized at the first heat receiving unit 21. By so doing, vaporized working fluid cannot be transferred, that is, heat cannot be transferred, from the first heat receiving unit 21 to the first heat radiating unit 22, so heat circulation using the first loop heat pipe 20 is stopped.

On the other hand, as the second valve device 35 is opened, working fluid is allowed to circulate between the second heat receiving unit 31 and the second heat radiating unit 32. Thus, the function of the second loop heat pipe 30 is enabled. At this time, the third valve device 37 is opened, so the first heat radiating unit 22 is in fluid communication with the second heat receiving unit 31. Therefore, the first heat radiating unit 22 and the second heat receiving unit 31 are united to function as a single heat receiving heat exchanging unit. Thus, the heat receiving capacity of the second heat receiving unit 31 increases.

In such a state, exhaust heat downstream of the downstream catalyst 6 is not transferred to the upstream catalyst 5, whereas heat of the upstream catalyst 5 is transferred to the second heat radiating unit 32. Thus, the upstream catalyst 5 is cooled. At this time, the coolant returned to the internal combustion engine 1 is continuously heated using heat of the upstream catalyst 5.

As described above, in the first embodiment according to the invention, the first loop heat pipe 20 is used to recover heat of exhaust gas exhausted from the internal combustion engine 1, thus making it possible to accelerate an increase in temperature of the upstream catalyst 5 by heating the upstream catalyst 5 from the outside. In addition, the second loop heat pipe 30 is used to recover heat of the upstream catalyst 5, thus making it possible to cool the upstream catalyst 5 while accelerating an increase in temperature of the coolant of the internal combustion engine 1. In this way, it is possible to efficiently warm up the catalysts 5 and 6 attached to the internal combustion engine 1 and to efficiently warm up the coolant of the internal combustion engine 1.

In addition, under a condition that the temperature of the upstream catalyst 5 or the coolant temperature of the internal combustion engine 1 tends to be higher than a predetermined upper limit, both the first and second loop heat pipes 20 and 30 are halted. By so doing, it is possible to prevent a decrease in function due to excessive heating of the upstream catalyst 5 and overheating of the internal combustion engine 1.

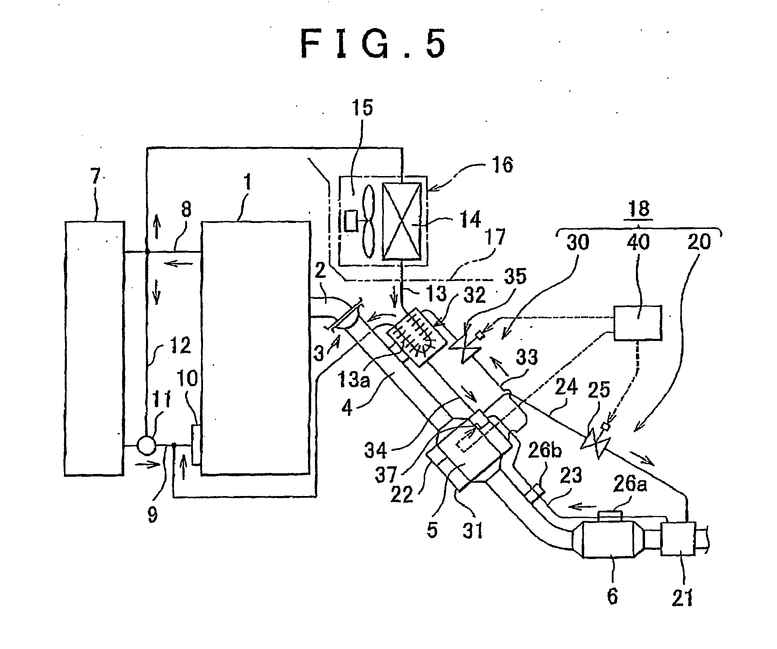

Note that the second valve device 35 described in the first embodiment may be provided in the second transfer pipe 33 instead as shown, for example, in FIG 5. The operation in this case may be basically similar to that of the first embodiment. In addition, although not shown in the drawing, the first valve device 25 described in the first embodiment may be provided in the first transfer pipe 23 instead. The operation in this case may be basically similar to that of the first embodiment.

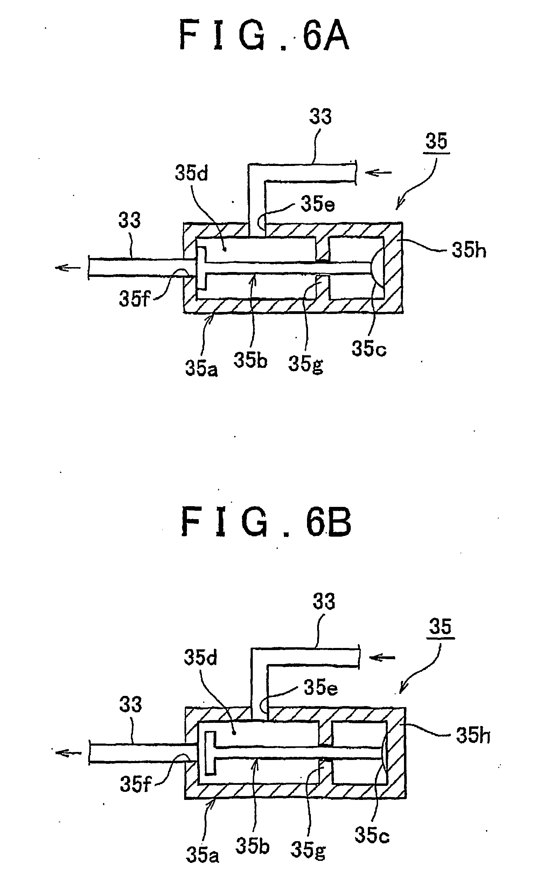

Furthermore, the second valve device 35 provided in the second transfer pipe 33 may be of a self-actuated type that automatically controls the opening degree in accordance with a predetermined actuating condition. The self-actuated second valve device 35, for example, includes a cylinder case 35a, a valve element 35b and a diaphragm spring 35c as shown in FIG. 6A and FIG. 6B.

An introducing port 35e for working fluid is provided in a peripheral wall of a cylinder chamber 35d of the cylinder case 35a, and a drain port 35f for working fluid is provided in one end wall of the cylinder chamber 35d. The second transfer pipe 33 is split at a midpoint, and an end portion of the split second transfer pipe 33 adjacent to the second heat receiving unit 31 is coupled to the introducing port 35e so as to be in fluid communication with the introducing port 35e, while an end portion of the split second transfer pipe 33 adjacent to the second heat radiating unit 32 is coupled to the drain port 35f so as to be in fluid communication with the drain port 35f.

The valve element 35b is slidably accommodated in the cylinder chamber 35d so as to open or close the drain port 35f. A guide wall 35g is provided on an inner peripheral wall of the cylinder chamber 35d to guide sliding action of the valve element 35b.

A valve stem end of the valve element 35b is attached to the other end inner wall surface 35h of the cylinder chamber 35d via the diaphragm spring 35c. The diaphragm spring 35c is elastically deformed into an extended shape or elastically restored into a curved shape in accordance with a variation in internal pressure of the cylinder chamber 35d, which correlates with the temperature Tsc of the upstream catalyst 5. The diaphragm spring 35c slides the valve element 35b in accordance with the elastic deformation or the elastic restoration to open or close the drain port 35f.

The operation of the self-actuated second valve device 35 will be described. First, when the condition that it is necessary to activate the upstream catalyst 5 is satisfied, that is, when the internal pressure of the cylinder chamber 35d is lower than a prescribed value, the diaphragm spring 35c is formed in a curved natural shape, and then the valve element 35b closes the drain port 35f, as shown in FIG. 6A. By so doing, working fluid vaporized at the second heat receiving unit 31 cannot be transferred to the second heat radiating unit 32, so heat circulation using the second loop heat pipe 30 is stopped. Note that the prescribed value is, for example, set at a pressure value that correlates with the activation temperature (first threshold T1) of the upstream catalyst 5.

On the other hand, when the condition that the upstream catalyst 5 is activated is satisfied, that is, when the internal pressure of the cylinder chamber 35d is higher than or equal to the prescribed value, the diaphragm spring 35c is elastically deformed into an extended shape, and then the valve element 35b opens the drain port 35f, as shown in FIG. 6B. By so doing, working fluid vaporized in the second heat receiving unit 31 can be transferred to the second heat radiating unit 32, so heat is circulated using the second loop heat pipe 30.

### Second Embodiment

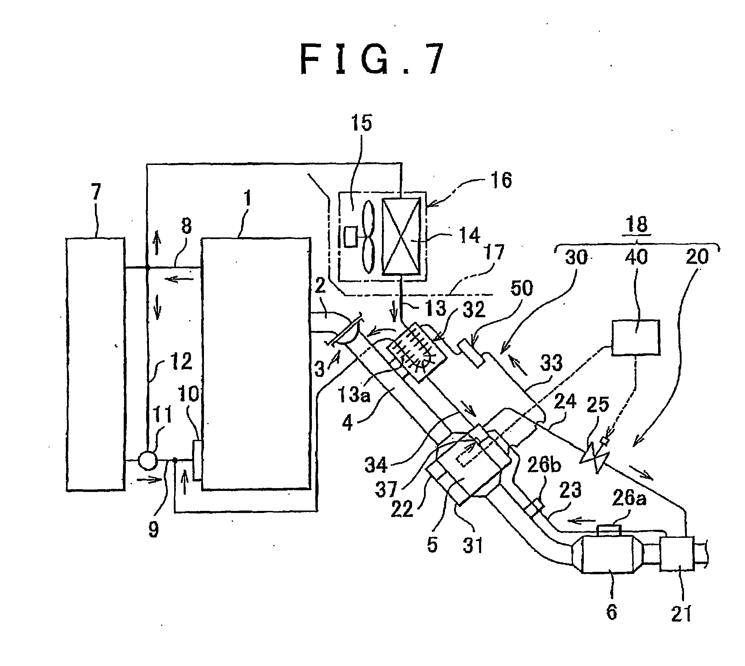

FIG. 7 to FIG. 9 show a second embodiment of the invention. In the second embodiment, the basic configuration of the exhaust heat recovery system 18 is similar to that of the first embodiment; however, the actuator-driven second valve device 35 described in the first embodiment is replaced with a self actuated second valve device 50, and the second valve device 50 is provided in the second transfer pipe 33.

In the second embodiment, control as to whether heat is circulated by the first loop heat pipe 20 of the exhaust heat recovery system 18 is mainly executed by the controller 40 and the first valve device 25, and control as to whether heat is circulated by the second loop heat pipe 30 of the exhaust heat recovery system 18 is mainly executed by the self-actuated second valve device 35 only.

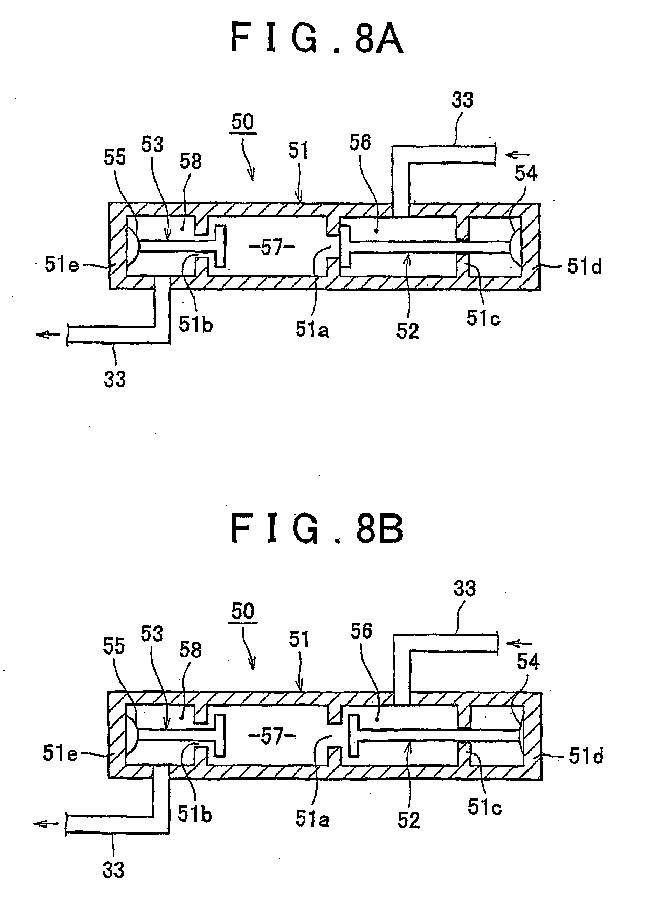

As shown in FIG. 8A to FIG. 8C, the self-actuated second valve device 50 includes a single cylinder case 51, two valve elements 52 and 53 and diaphragm springs 54 and 55. The cylinder case 51 has a horizontally long shape, and three cylinder chambers 56, 57 and 58 are formed inside the cylinder case 51.

The second transfer pipe 33 is split at a midpoint, and an end portion of the split second transfer pipe 33 adjacent to the second heat receiving unit 31 is coupled to the first cylinder chamber 56 so as to be in fluid communication with the first cylinder chamber 56, while an end portion of the split second transfer pipe 33 adjacent to the second heat radiating unit 32 is coupled to the third cylinder chamber 58 so as to be in fluid communication with the third cylinder chamber 58. Then, a partition wall that comparts into the first cylinder chamber 56 and the second cylinder chamber 57 has a first communication passage 51a for fluid communication between both the cylinder chambers 56 and 57. In addition, a partition wall that compares into the second cylinder chamber 57 and the third cylinder chamber 58 has a second communication passage 51b for fluid communication between both the cylinder chambers 57 and 58.

A first valve element 52 is slidably accommodated in the first cylinder chamber 56 so as to open or close the first communication passage 51a. A guide wall 51c is provided in the first cylinder chamber 56 to guide sliding action of the first valve element 52. A valve stem end of the first valve element 52 is attached to an end wall surface 51d of the first cylinder chamber 56 via the first diaphragm spring 54. The first diaphragm spring 54 is elastically deformed into an extended shape or elastically restored into a curved shaped in accordance with a variation in internal pressure of the first cylinder chamber 56, which correlates with the temperature Tsc of the upstream catalyst 5. The first diaphragm spring 54 slides the first valve element 52 in accordance with the elastic deformation or the elastic restoration to open or close the first communication passage 51a.

The second valve element 53 is slidably accommodated in the third cylinder chamber 58 so as to open or close the second communication passage 51b. A valve stem end of the second valve element 53 is attached to an end wall surface 51e of the third cylinder chamber 58 via the second diaphragm spring 55. The second diaphragm spring 55 is elastically restored into a curved shape or elastically deformed into an extended shape in accordance with a variation in internal pressure of the second cylinder chamber 57, which correlates with the temperature of the coolant delivered from the internal combustion engine 1. The second diaphragm spring 55 slides the second valve element 53 to open or close the second communication passage 51b.

Next, the operation of the self-actuated second valve device 50 will be described.

First, when the condition that it is necessary to activate (warm up) the upstream catalyst 5 is satisfied, that is, when the internal pressure of the first cylinder chamber 56 is lower than a first actuation value, the first diaphragm spring 54 is formed into a curved shape by elastic restoring force, and then the first valve element 52 is slid to a position at which the first communication passage 51a is closed, as shown in FIG. 8A. In this state, the second cylinder chamber 57 and the first cylinder chamber 56 are not in fluid communication with each other, so heat circulation using the second loop heat pipe 30 is stopped irrespective of whether the second valve element 53 is open or closed. Note that the first actuation value is, for example, set at a pressure value that correlates with the activation temperature (first threshold T1) of the upstream catalyst 5.

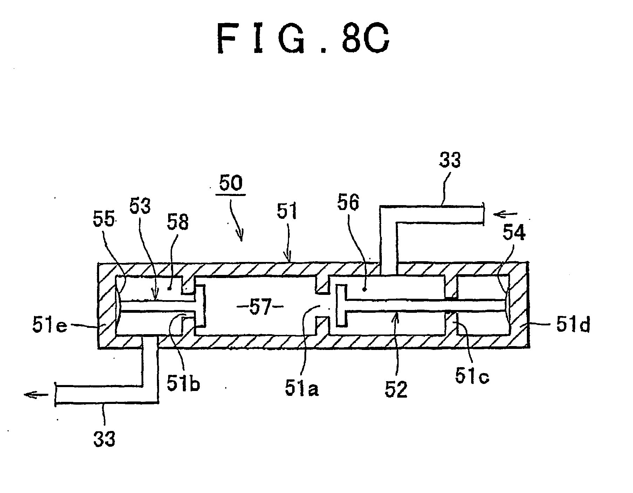

However, when the condition that the upstream catalyst 5 is activated is satisfied, that is, when the internal pressure of the first cylinder chamber 56 is higher than or equal to the first actuation value, the first diaphragm spring 54 is elastically deformed into an extended shape against the elastic restoring force, and then the first valve element 52 is slid to a position at which the first communication passage 51a is opened, as shown in FIG 8B and FIG. 8C. In this state, the second cylinder chamber 57 and the first cylinder chamber 56 are in fluid communication with each other, so heat is circulated by the second loop heat pipe 30 when the second valve element 53 is open, while heat circulation using the second loop heat pipe 30 is stopped when the second valve element 53 is closed.

In addition, when the condition that it is necessary to heat (warm up) the coolant delivered from the internal combustion engine 1 and the temperature of the coolant has not reached an upper limit temperature is satisfied, that is, when the internal pressure of the second cylinder chamber 57 is higher than or equal to a second actuation value and lower than a third actuation value, the second diaphragm spring 55 is formed into a curved shape by the elastic restoring force, and then the second valve element 53 is slid to a position at which the second communication passage 51b is opened, as shown in FIG. 8A and FIG. 8B. In this state, the second and third cylinder chambers 57 and 58 and the second heat radiating unit 32 are in fluid communication with each other. At this time, heat is circulated by the second loop heat pipe 30 when the first valve element 52 is open, while heat circulation using the second loop heat pipe 30 is stopped when the first valve element 52 is closed. Note that the second actuation value is set at a pressure value that correlates with a necessary temperature (second threshold T2) to which the temperature Tw of the coolant delivered from the internal combustion engine 1 needs to be increased. The third actuation value is set at a pressure value that correlates with an upper limit temperature (fourth threshold T4) to which the temperature Tw of the coolant delivered from the internal combustion engine 1 is increased.

However, when the condition that the temperature of the coolant delivered from the internal combustion engine 1 has reached the upper limit temperature is satisfied, that is, when the internal pressure of the second cylinder chamber 57 is higher than or equal to the third actuation value, the second diaphragm spring 55 is elastically deformed into an extended shape against the elastic restoring force, and then the second valve element 53 is slid to a position at which the second communication passage 51b is closed, as shown in FIG. 8C. In this state, the second and third cylinder chambers 57 and 58 and the second heat radiating unit 32 are not in fluid communication with each other, so heat circulation, using the second loop heat pipe 30 is stopped irrespective of whether the first valve element 52 is open or closed.

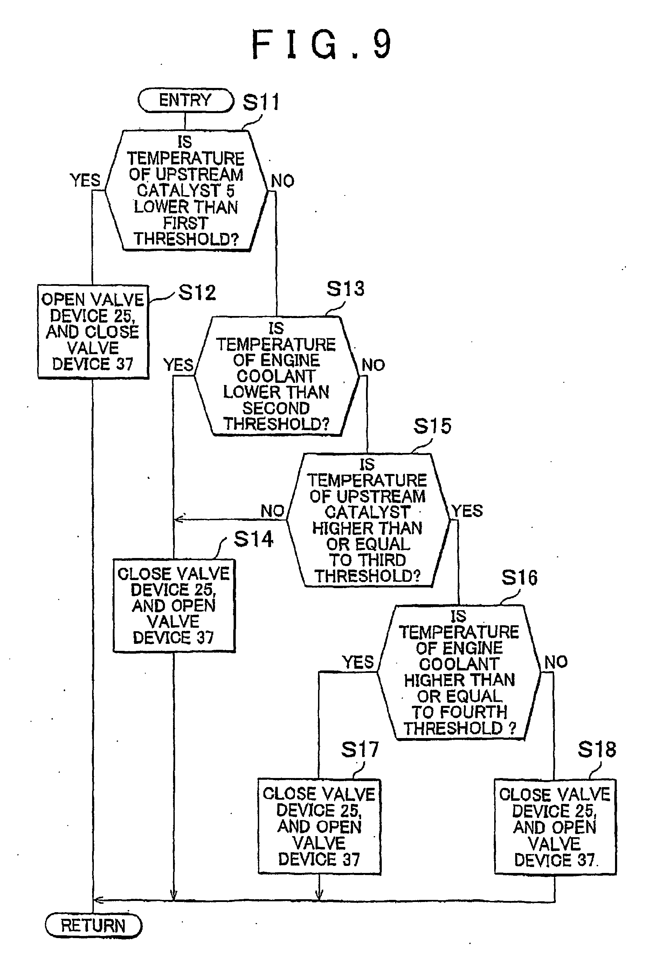

Next, the operation of the controller 40 will be described in detail with reference to FIG. 9. The flowchart shown in FIG 9 is predominantly formed of the operation of the first loop heat pipe 20 controlled by the controller 40.

As the routine enters the flowchart, it is determined in step S11 whether the temperature Tsc of the upstream catalyst 5 is lower than the first threshold T1. Note that the temperature Tsc of the upstream catalyst 5 may be, for example, recognized on the basis of an output from a sensor (not shown) that detects the catalyst bed temperature of the upstream catalyst 5. In addition, the first threshold T1 is, for example, appropriately set on the basis of the temperature (for example, 300 to 400°C) at which the upstream catalyst 5 is activated.

Here, when the temperature Tsc of the upstream catalyst 5 is lower than the first threshold T1, affirmative determination is made in step S11, and then the process proceeds to step S12.

In step S12, the first valve device 25 is opened to circulate heat using the first loop heat pipe 20, and the third valve device 37 is closed to shut off fluid communication between the first heat radiating unit 22 and the second heat receiving unit 31. At this time, as for the self-actuated second valve device 50, as shown in FIG. 8A, the first diaphragm spring 54 is formed into a curved shape to cause the first valve element 52 to close the first communication passage 51a, while the second diaphragm spring 55 is formed into a curved shape to cause the second valve element 53 to open the second communication passage 51b. Thus, heat circulation using the second loop heat pipe 30 is stopped. As a result, exhaust heat that passes through the downstream catalyst 6 may be recovered by the first loop heat pipe 20 to heat the upstream catalyst 5 without recovering heat of the upstream catalyst 5 by the second loop heat pipe 30. Thus, it is possible to accelerate an increase in temperature of the upstream catalyst 5.

On the other hand, when the temperature Tsc of the upstream catalyst 5 is higher than or equal to the first threshold T1, negative determination is made in step S11, and then, in step S13, it is checked whether it is necessary to warm up the internal combustion engine 1. Here, it is determined whether the temperature Tw of the coolant delivered from the internal combustion engine 1 is lower than the second threshold T2.

Here, when affirmative determination is made in step S13, that is, when the coolant temperature Tw is lower than the temperature during normal operation, it is necessary to warm up the internal combustion engine 1, and the process proceeds to step S14.

In step S14, the first valve device 25 is closed to stop heat circulation using the first loop heat pipe 20, and the third valve device 37 is opened to provide fluid communication between the first heat radiating unit 22 and the second heat receiving unit 31. At this time, as for the self-actuated second valve device 50, as shown in FIG. 8B, the second diaphragm spring 55 is formed into a curved shape to cause the second valve element 53 to open the second communication passage 51b, and, in addition, because the temperature Tsc of the upstream catalyst 5 is higher than or equal to the first threshold T1, the first diaphragm spring 54 is formed into an extended shape to cause the first valve element 52 to open the first communication passage 51a. Thus, heat is circulated by the second loop heat pipe 30. As a result, heating of the upstream catalyst 5 using the first loop heat pipe 20 is stopped, and heat of the upstream catalyst 5 is recovered by the second loop heat pipe 30 to heat the coolant in the heater passage 13. Thus, it is possible to cool the upstream catalyst 5 while accelerating an increase in temperature of the coolant.

Then, the third valve device 37 is opened to provide fluid communication between the first heat radiating unit 22 and the second heat receiving unit 31 to form a single large-volume space. Thus, it is possible to efficiently recover heat of the upstream catalyst 5 by the working fluid present in the large-volume space and to transfer the recovered heat to the second heat radiating unit 32.

On the other hand, when negative determination is made in step S13, that is, when the coolant temperature Tw falls within the temperature range during normal operation, the process proceeds to step S15.

In step S15, it is determined whether the temperature Tsc of the upstream catalyst 5 is higher than or equal to a third threshold T3 that is higher than the first threshold T1. Note that the third threshold T3 is set as an appropriate upper limit temperature, for example, on the basis of the heat-resistant temperature (for example, 800 to 900°C) of the upstream catalyst 5. In step S15, in short, it is checked whether the temperature of the upstream catalyst 5 is excessively increased.

When negative determination is made in step S15, that is, when the temperature Tsc of the upstream catalyst 5 is not excessively increased, the process returns to step S14. That is, during a period since the temperature of the upstream catalyst 5 has reached the activation temperature until the temperature of the upstream catalyst 5 is excessively increased, heat circulation using the first loop heat pipe 20 is stopped, and heat is circulated by the second loop heat pipe 30. Thus, it is possible to cool the upstream catalyst 5.

Incidentally, when affirmative determination is made in step S15, that is, when the temperature Tsc of the upstream catalyst 5 is excessively increased, the process proceeds to step S16, and then it is further determined whether the coolant temperature Tw is higher than or equal to a fourth threshold T4 higher than the second threshold T2.

Note that the fourth threshold T4 is appropriately set as an upper limit temperature within a range that is higher than an upper limit temperature of a coolant temperature range (for example, 60 to 80°C) during normal operation and lower than an overheating temperature (for example, 110°C). In this way, the reason why the fourth threshold T4 is not set at the overheating temperature but at a value lower than the overheating temperature is to provide a temporal margin before overheating.

In short, in step S16, it is checked whether the coolant of the internal combustion engine 1 tends to overheat.

When affirmative determination is made in step S16, the temperature Tsc of the upstream catalyst 5 is excessively increased and the coolant temperature Tw is excessively increased. Thus, the process proceeds to step S17 in order to stop warming up the upstream catalyst 5 and stop warming up the coolant.

In step S17, the first valve device 25 is closed to stop heat circulation using the first loop heat pipe 20, and the third valve device 37 is opened to provide fluid communication between the first heat radiating unit 22 and the second heat receiving unit 31. At this time, as for the self-actuated second valve device 50, as shown in FIG. 8C, the first diaphragm spring 54 is formed into an extended shape to cause the first valve element 52 to open the first communication passage 51a, while the second diaphragm spring 55 is formed into an extended shape to cause the second valve element 53 to close the second communication passage 51b. Thus, heat circulation using the second loop heat pipe 30 is stopped. As a result, heating of the upstream catalyst 5 using the first loop heat pipe 20 is stopped, and heating of the coolant using the second loop heat pipe 30 is stopped. Thus, it is possible to prevent the upstream catalyst 5 and the coolant in the heater passage 13 from excessively increasing.

Then, the third valve device 37 is opened to provide fluid communication between the first heat radiating unit 22 and the second heat receiving unit 31 to form a single large-volume space. Thus, it is possible to efficiently recover heat of the upstream catalyst 5 by working fluid present in the large-volume space and to radiate the recovered heat to the atmosphere.

On the other hand, when negative determination is made in step S16, the temperature Tsc of the upstream catalyst 5 is excessively increased; however, the coolant temperature Tw is not excessively increased. Thus, it is not necessary to warm up the coolant, and the process proceeds to step S18.

In step S18, the first valve device 25 is closed to stop heat circulation using the first loop heat pipe 20, and the third valve device 37 is opened to provide fluid communication between the first heat radiating unit 22 and the second heat receiving unit 31. At this time, as for the self-actuated second valve device 50, as shown in FIG. 8B, because the temperature Tsc of the upstream catalyst 5 is higher than or equal to the third threshold T3, the first valve element 52 opens the first communication passage 51a, and, in addition, because the coolant temperature Tw is lower than the fourth threshold T4, the second valve element 53 opens the second communication passage 51b. Thus, heat is circulated by the second loop heat pipe 30. As a result, heating of the upstream catalyst 5 using the first loop heat pipe 20 is stopped, and heat of the upstream catalyst 5 is recovered by the second loop heat pipe 30 to heat the coolant in the heater passage 13. By so doing, the upstream catalyst 5 is cooled.

Then, the third valve device 37 is opened to provide fluid communication between the first heat radiating unit 22 and the second heat receiving unit 31 to form a single large-volume space. Thus, it is possible to efficiently recover heat of the upstream catalyst 5 by working fluid in the large-volume space and to radiate the recovered heat to the atmosphere. Hence, the operation of cooling the upstream catalyst 5 is improved.

As described above, in the second embodiment, similar functions and advantageous effects to those of the first embodiment may be obtained, and, in addition, it is possible to provide simple configuration and reduction in facility costs using the self-actuated second valve device 50 as compared with the first embodiment.

### Third Embodiment

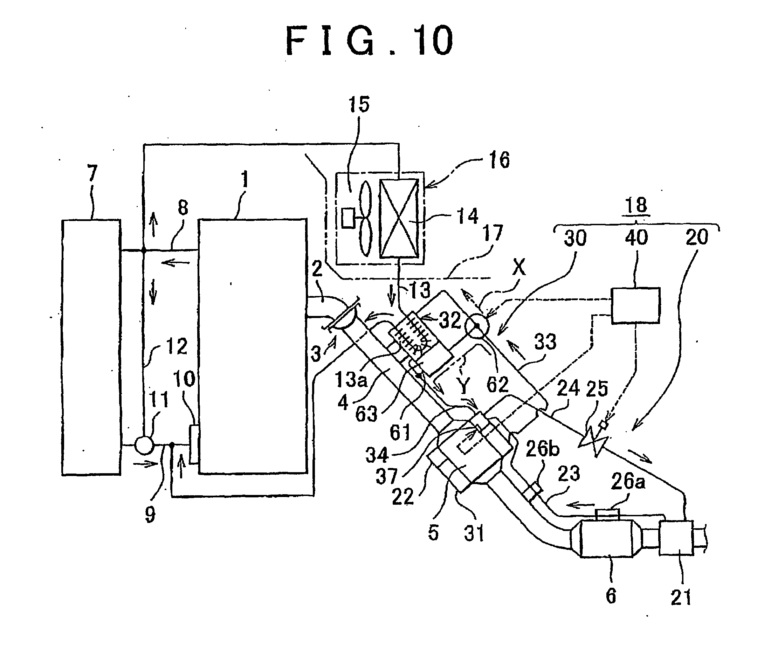

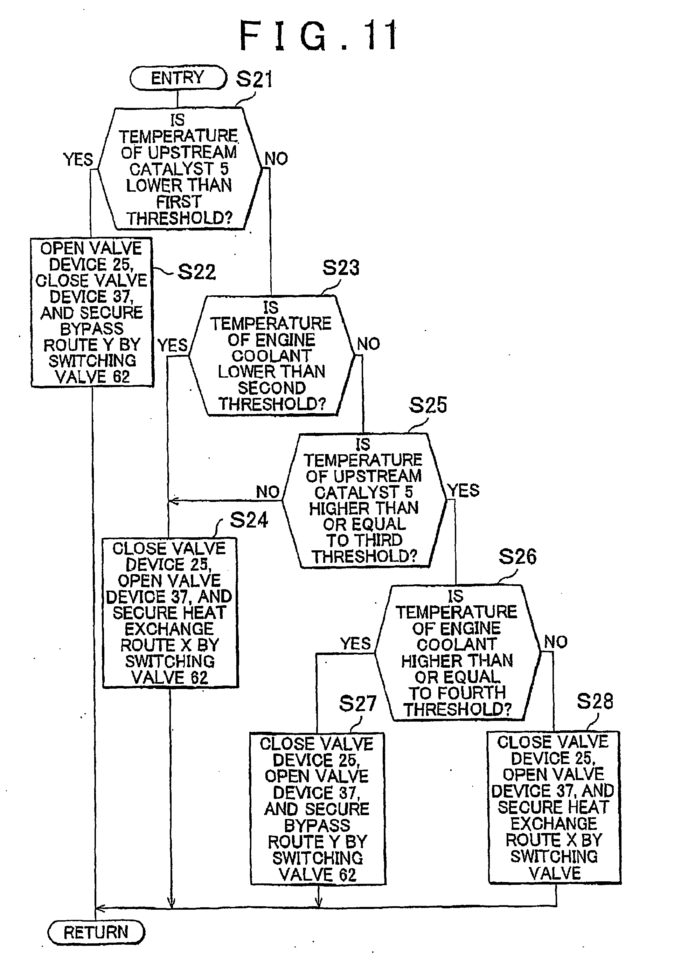

FIG. 10 and FIG. 11 show a third embodiment of the invention. In the third embodiment, the basic configuration of the exhaust heat recovery system 18 is similar to that of the first embodiment; however, the second valve device 35 described in the first embodiment is omitted, and a bypass pipe 61, a switching valve 62 and an atmospheric heat radiation tank 63 are additionally provided for the second loop heat pipe 20 instead.

In the third embodiment, control as to whether heat is circulated by the first loop heat pipe 20 of the exhaust heat recovery system 18 is mainly executed by the controller 40 and the first valve device 25, and control as to whether heat is transferred to the coolant in the heater passage 13 by the second loop heat pipe 30 of the exhaust heat recovery system 18 is mainly executed by the controller 40 and the switching valve 62.

The bypass pipe 61 is connected to the second transfer pipe 33 and the second return pipe 34 so as to bypass the second heat radiating unit 32.

The switching valve 62 is an actuator-driven three-way valve that is controlled for switching by the controller 40. The switching valve 62 is provided at a portion at which the bypass pipe 51 is connected to the second transfer pipe 33. The switching valve 62 is switched so as to secure a heat exchange route X or a bypass route Y as needed. The heat exchange route X provides fluid communication between the second transfer pipe 33 and the second heat radiating unit 32. The bypass route Y provides fluid communication between the second transfer pipe 33 and the bypass pipe 51.

The atmospheric heat radiation tank 63 is provided midway of the bypass pipe 61, and causes gaseous working fluid, introduced from the bypass pipe 51, to condense by undergoing heat exchange with the atmosphere. The atmospheric heat radiation tank 63 is provided next to the second heat radiating unit 32 in the third embodiment.

Then, when the heat exchange route X is secured by the switching valve 62, heat is transferred from the second loop heat pipe 30 to the coolant. On the other hand, when the bypass route Y is secured by the switching valve 62, heat transfer from the second loop heat pipe 30 to the coolant in the heater passage 13 is stopped.

Next, the operation of the exhaust heat recovery system 18 according to the third embodiment will be described with reference to the flowchart shown in FIG 11. The flowchart shown in FIG 11 is predominantly formed of the operation of the controller 40.

As the routine enters the flowchart, first, it is determined in step S21 whether the temperature Tsc of the upstream catalyst 5 is lower than the first threshold T1. Note that the temperature Tsc of the upstream catalyst 5 may be, for example, recognized on the basis of an output from a sensor (not shown) that detects the catalyst bed temperature of the upstream catalyst 5. In addition, the first threshold T1 is, for example, appropriately set on the basis of the temperature (for example, 300 to 400° C) at which the upstream catalyst 5 is activated.

In short, in step S21, it is checked whether the upstream catalyst 5 is activated, that is, whether it is necessary to activate (warm up) the upstream catalyst 5.

Here, when affirmative determination is made in step S21, that is, the temperature Tsc of the upstream catalyst 5 has not reached the activation temperature of the upstream catalyst 5, it is necessary to activate (warm up) the upstream catalyst 5 and then the process proceeds to step S22.

In step S22, the first valve device 25 is opened to circulate heat using the first loop heat pipe 20, and the bypass route Y is secured by the switching valve 60 to stop heat transfer from the second loop heat pipe 30 to the coolant in the heater passage 13. Then, the third valve device 37 is closed to shut off fluid communication between the first heat radiating unit 22 and the second heat receiving unit 31.

First, as the first valve device 25 is opened, working fluid circulates between the first heat receiving unit 21 and the first heat radiating unit 22 while changing its phase, so the function of the first loop heat pipe 20 is enabled. By so doing, exhaust gas exhausted from the internal combustion engine 1 to the exhaust pipe 4 reaches the first heat receiving unit 21 of the first loop heat pipe 20 via the two catalysts 5 and 6, working fluid in the first heat receiving unit 21 is vaporized by heat of the exhaust gas, and then the vaporized working fluid is transferred to the first heat radiating unit 22. via the first transfer pipe 23. At this time, the third valve device 37 is closed to shut off fluid communication between the first heat radiating unit 22 and the second heat receiving unit 31. Thus, the upstream region in the upstream catalyst 5 is heated by vaporized working fluid in the first heat radiating unit 22. As the working fluid is condensed through this heating, the condensed working fluid is returned to the first heat receiving unit 21 via the first return pipe 24. Note that, as the temperature of the upstream catalyst 5 increases, the temperature of the downstream catalyst 6 is also increased by heat of reaction caused by the action of purifying exhaust gas.

On the other hand, as the bypass route Y is secured by the switching valve 62, working fluid vaporized at the second heat receiving unit 31 is not introduced into the second heat radiating unit 32 but introduced into the atmospheric heat radiation tank 63. Thus, heat cannot be transferred from the second heat radiating unit 32 to the coolant in the heater passage 13. By so doing, heat transfer from the second loop heat pipe 30 to the coolant is stopped, so the coolant is not heated. Thus, the temperature of the upstream catalyst 5 is preferentially increased.

In addition, in such a state, heat of exhaust gas that passes through the first heat receiving unit 21 is recovered, so the volume of the exhaust gas reduces to reduce exhaust noise.

Incidentally, when negative determination is made in step S21, that is, when the temperature Tsc of the upstream catalyst 5 is higher than or equal to the activation temperature of the upstream catalyst 5, it is not necessary to warm up the upstream catalyst 5; rather, it is necessary to cool the upstream catalyst 5 for preventing an excessive increase in temperature, and then the process proceeds to step S23.

In step S23, it is determined whether the temperature Tw of the coolant delivered from the internal combustion engine 1 is lower than a second threshold T2. Note that the coolant temperature Tw may be, for example, recognized on the basis of an output from a coolant temperature sensor (not shown) that detects the temperature of the upstream side of the coolant delivery passage 8 extending from the internal combustion engine 1. In addition, the second threshold T2 may be set at a temperature, for example, 40°C, that is lower than a lower limit temperature of a coolant temperature range (for example, 60 to 80°C) during normal operation after the engine is warmed up, that is, a temperature at which it is necessary to warm up the engine.

In short, in step 523, it is checked whether it is necessary to warm up (heat) the coolant of the internal combustion engine 1.

Here, when affirmative determination is made in step S23, that is, when the coolant temperature Tw is lower than the temperature during normal operation, it is necessary to warm up the coolant of the internal combustion engine 1, and the process proceeds to step S24.

In step S24, the first valve device 25 is closed to stop heat circulation using the first loop heat pipe 20, and the heat exchange route X is secured by the switching valve 62 to transfer heat from the second loop heat pipe 30 to the coolant in the heater passage 13. Then, the third valve device 37 is opened to provide fluid communication between the first heat radiating unit 22 and the second heat receiving unit 31.

As the first valve device 25 is closed, working fluid liquefied at the first heat radiating unit 22 cannot be returned back to the first heat receiving unit 21. Thus, working fluid is not vaporized at the first heat receiving unit 21. By so doing, vaporized working fluid cannot be transferred, that is, heat cannot be transferred, from the first heat receiving unit 21 to the first heat radiating unit 22, so the function of the first loop heat pipe 20 is disabled.

On the other hand, as the heat exchange route X is secured by the switching valve 62, working fluid vaporized at the second heat receiving unit 31 is introduced into the second heat radiating unit 32. Thus, heat is exchanged between the gaseous working fluid in the second heat radiating unit 32 and the coolant in the heater passage 13. That is, heat is transferred from the second loop heat pipe 30 to the coolant in the heater passage 13. Then, the third valve device 37 is opened to unify the first heat radiating unit 22 and the second heat receiving unit 31 as a single large-volume space. Thus, it is possible to efficiently recover heat of the upstream catalyst 5 by working fluid present in the large-volume space and to transfer the recovered heat to the second heat radiating unit 32. Therefore, the performance of heating the coolant in the heater passage 13 by the second loop heat pipe 30 is improved, so it is advantageous in accelerating an increase in temperature of the coolant and also advantageous in suppressing an excessive increase in temperature of the upstream catalyst 5.

On the other hand, when negative determination is made in step S23, that is, when the coolant temperature Tw falls within the temperature range during normal operation, the process proceeds to step S25.

In step S25, it is determined whether the temperature Tsc of the upstream catalyst 5 is higher than or equal to a third threshold T3 that is higher than the first threshold T1. Note that the third threshold T3 is appropriately set, for example, on the basis of the heat-resistant temperature (for example, 800 to 900°C) of the upstream catalyst 5.

In short, in step S25, it is checked whether the temperature of the upstream catalyst 5 is excessively increased to reach an upper limit temperature.

When negative determination is made in step S25, that is, when the temperature Tsc of the upstream catalyst 5 has not reached the upper limit temperature, the process returns to step S24. That is, during a period since the temperature of the upstream catalyst 5 has reached the activation temperature until the temperature reaches the upper limit temperature, heat of the upstream catalyst 5 is recovered by the second loop heat pipe 30 to transfer the recovered heat to the coolant.

Incidentally, when affirmative determination is made in step S25, that is, when the temperature Tsc of the upstream catalyst 5 has reached the upper limit temperature, the process proceeds to step S26, and then it is further determined whether the coolant temperature Tw is higher than or equal to a fourth threshold T4 higher than the second threshold T2.

Note that the fourth threshold T4 is appropriately set within a range that is higher than an upper limit temperature of a coolant temperature range (for example, 60 to 80°C) during normal operation and lower than an overheating temperature (for example, 110°C). In this way, the reason why the fourth threshold T4 is not set at the overheating temperature but at a value lower than the overheating temperature is to provide a temporal margin before overheating.

In short, in step S26, it is checked whether the coolant of the internal combustion engine 1 tends to overheat.

When affirmative determination is made in step S26, the temperature Tsc of the upstream catalyst 5 has reached the upper limit temperature, and the temperature Tw of the coolant has reached the upper limit temperature. Thus, the process proceeds to step S27 in order to stop warming up the upstream catalyst 5 and stop warming up the coolant.

In step S27, the first valve device 25 is closed to stop heat circulation using the first loop heat pipe 20, and the bypass route Y is secured by the switching valve 62 to stop heat transfer from the second loop heat pipe 30 to the coolant in the heater passage 13. Then, the third valve device 37 is opened to provide fluid communication between the first heat radiating unit 22 and the second heat receiving unit 31.

As the first valve device 25 is closed, working fluid liquefied at the first heat radiating unit 22 cannot be returned back to the first heat receiving unit 21. Thus, working fluid is not vaporized at the first heat receiving unit 21. By so doing, vaporized working fluid cannot be transferred from the first heat receiving unit 21 to the first heat radiating unit 22, so the function of the first loop heat pipe 20 is disabled to stop heating the upstream catalyst 5.

In addition, as the bypass route Y is secured by the switching valve 62, working fluid vaporized at the second heat receiving unit 31 is not introduced into the second heat radiating unit 32 but introduced into the atmospheric heat radiation tank 63. By so doing, heat cannot be transferred from the second heat radiating unit 32 to the coolant in the heater passage 13, and heat of the gaseous working fluid introduced into the atmospheric heat radiation tank 63 is radiated to the atmosphere. That is, heat of the upstream catalyst 5 is recovered by the second loop heat pipe 30 but heat transfer to the coolant in the heater passage 13 is stopped. Thus, it is possible to decrease the temperature of the upstream catalyst 5 without heating the coolant. Note that, in the atmospheric heat radiation tank 63, heat of the gaseous working fluid is radiated to the atmosphere to condense the working fluid, and the condensed working fluid is returned to the second heat receiving unit 31 via the second return pipe 34.

Then, the third valve device 37 is opened to provide fluid communication between the first heat radiating unit 22 and the second heat receiving unit 31 to form a single large-volume space. Thus, it is advantageous in improving the action of cooling the upstream catalyst 5 because it is possible to, for example, efficiently recover heat of the upstream catalyst 5 by the working fluid present in the large-volume space.

On the other hand, when negative determination is made in step S26, the temperature Tsc of the upstream catalyst 5 has reached the upper limit temperature, but the temperature Tw of the coolant has not reached the upper limit temperature. Thus, the process proceeds to step S28.

In step S28, the first valve device 25 is closed to stop heat circulation using the first loop heat pipe 20, and the heat exchange route X is secured by the switching valve 62 to transfer heat from the second loop heat pipe 30 to the coolant in the heater passage 13. Then, the third valve device 37 is opened to provide fluid communication between the first heat radiating unit 22 and the second heat receiving unit 31.

As the first valve device 25 is closed, working fluid condensed at the first heat radiating unit 22 cannot be returned back to the first heat receiving unit 21. Thus, working fluid is not vaporized at the first heat receiving unit 21. By so doing, vaporized working fluid cannot be transferred, that is, heat cannot be transferred, from the first heat receiving unit 21 to the first heat radiating unit 22, so the function of the first loop heat pipe 20 is disabled to stop heating the upstream catalyst 5.

On the other hand, as the heat exchange route X is secured by the switching valve 62, working fluid vaporized at the second heat receiving unit 31 is introduced into the second heat radiating unit 32. Thus, heat is exchanged between the gaseous working fluid in the second heat radiating unit 32 and the coolant in the heater passage 13. That is, heat is transferred from the second loop heat pipe 30 to the coolant. Then, the third valve device 37 is opened to provide fluid communication between the first heat radiating unit 22 and the second heat receiving unit 31 to form a single large-volume space. Thus, it is possible to efficiently recover heat of the upstream catalyst 5 by the working fluid present in the large-volume space and to transfer the recovered heat to the second heat radiating unit 32. By so doing, the upstream catalyst 5 is cooled.

As described above, in the third embodiment, similar functions and advantageous effects to those of the first embodiment may be obtained, and, in addition, for example, when the bypass route Y is secured to circulate heat by the second loop heat pipe 30 while heat transfer to the coolant in the heater passage 13 is stopped, it is possible to cool the upstream catalyst 5 without heating the coolant.

Note that the aspect of the invention is not limited to the above embodiments; the aspect of the invention may be modified or improved in various forms within the scope recited in the appended claims and equivalents thereof. Alternative embodiments will be described below.

(1) In the above embodiments, the internal combustion engine 1 is not limited to a gasoline engine, a diesel engine, or another engine. When the internal combustion engine 1 is a diesel engine, the catalysts 5 and 6 may be, for example, a diesel particulate filter (DPF), a diesel particulate-NOx reduction system (DPNR), or the like.

Note that, when the internal combustion engine 1 is a diesel engine, the upstream catalyst 5 may be a NOx storage reduction (NSR), and the downstream catalyst 6 may be a NOx selective catalytic reduction (SCR).

(2) In the above embodiments, the two catalysts 5 and 6 are provided; however, the number of catalysts is not limited. For example, the number of catalysts may be one or three or more.

(3) In the above embodiments, each of the first heat radiating unit 22 and the second heat receiving unit 31 that are attached to the upstream catalyst 5 has an annular shape that surrounds the upstream catalyst 5; however, the outer shape of each of the first heat radiating unit 22 and the second heat receiving unit 31 is not specifically limited. The outer shape of each of the first heat radiating unit 22 and the second heat receiving unit 31 may be, for example, a curved shape so as to be attached to part of a region on an outer wall surface of the upstream catalyst 5.

(4) In the above embodiments, the second heat radiating unit 32 of the second loop heat pipe 30 is provided in a region from the spherical joint 3 to the upstream catalyst 5; however, a location at which the second heat radiating unit 32 is provided is not specifically limited. For example, the second heat radiating unit 32 may be provided at a location adjacent to the coolant delivery passage 8 of the internal combustion engine 1 away from the exhaust passage 2, 4.

(5) In the above embodiments, the second heat radiating unit 32 of the second loop heat pipe 30 is used to heat the coolant that is returned from the heater core 14 of the hot-air heater 16 to the internal combustion engine 1; however, the aspect of the invention is not limited to it.

For example, a target heated by the second heat radiating unit 32 may be the coolant introduced into the heater core 14. In this case, under the condition that the hot-air heater 16 is operated when the internal combustion engine 1 is warmed up, it is possible to accelerate an increase in temperature of the coolant introduced into the heater core 14. Thus, it is possible to early start the heater function while the internal combustion engine 1 is warmed up.

In addition, a target heated by the second heat radiating unit 32 may be the coolant that flows through the bypass passage 12. The bypass passage 12 is used when it is necessary to increase the temperature of the coolant, for example, when the internal combustion engine 1 is warmed up. Thus, the temperature of the coolant that flows through the bypass passage 12 may be promptly increased by the second heat radiating unit 32, so it is possible to quickly complete the warming up of the internal combustion engine 1.

In any embodiments as well, when it is not necessary to accelerate an increase in temperature of a heated target, the second valve device 35 may be closed to stop recovery of exhaust heat.

(6) In the above embodiments, the third valve device 37 is configured to use the actuator 37c as a driving source, and the opening degree of the third valve device 37 is controlled by the controller 40. Although not shown in the drawing in detail, the third valve device 37 may be a self-actuated valve device that uses a diaphragm spring as a driving source to open or close its valve element.

The valve device that uses the diaphragm spring may be, for example, configured so that the valve is closed at normal temperature and, when the internal pressure of the first heat radiating unit 22 increases to a pressure corresponding to a predetermined set temperature, the diaphragm spring is elastically deformed by the internal pressure to displace the valve element to open.

(7) In the above embodiments, the hollow sleeves 22a and 31a are respectively used as the first heat radiating unit 22 and the second heat receiving unit 31; however, the aspect of the invention is not limited. Although not shown in the drawing, for example, it is also applicable that the hollow sleeves 22a and 31a are not used and a case having no inner peripheral walls of the hollow sleeves 22a and 31a is used. In this case, the fins 22b and 31b may be provided on the radially outer side of an outer case of the upstream catalyst 5.

(8) In the above embodiments, FIG. 1 shows an example in which the first return pipe 24 and the second return pipe 34 are respectively arranged above the first transfer pipe 23 and the second transfer pipe 33; however, the aspect of the invention is not limited to this configuration. Although not shown in the drawing, for example, the first return pipe 24 and the second return pipe 34 may be arranged below the exhaust pipe 4.

## Claims

1. An exhaust heat recovery system comprising:
a first loop heat pipe (20) that recovers exhaust heat downstream of a first catalyst (5) in an exhaust passage of an internal combustion engine (1) and that exchanges heat with the first catalyst (5); and
a second loop heat pipe (30) that recovers heat of the first catalyst (5) and that exchanges heat with coolant that is delivered from the internal combustion engine.

2. The exhaust heat recovery system according to claim 1, wherein
the first loop heat pipe (20) includes
a first heat receiving unit (21) that vaporizes working fluid, which is hermetically sealed and filled inside the first heat receiving unit, by exhaust heat downstream of the first catalyst in the exhaust passage,
a first heat radiating unit (22) that is attached in an upstream region in the first catalyst and that causes heat exchange between working fluid, transferred from the first heat receiving unit (21), and the first catalyst to condense the working fluid,
a first transfer pipe (23) that is used to transfer working fluid from the first heat receiving unit (21) to the first heat radiating unit (22), and
a first return pipe (24) that is used to return working fluid from the first heat radiating unit (22) to the first heat receiving unit (21), and wherein
the second loop heat pipe (30) includes
a second heat receiving unit (31) that is attached in a downstream region in the first catalyst and that vaporizes working fluid, which is hermetically sealed and filled inside the second heat receiving unit (31), by heat of the first catalyst,
a second heat radiating unit (32) that causes heat exchange between working fluid, transferred from the second heat receiving unit (31), and coolant, delivered from the internal combustion engine, to condense the working fluid,
a second transfer pipe (33) that is used to transfer working fluid from the second heat receiving unit (31) to the second neat radiating unit (32), and
a second return pipe (34) that is used to return working fluid from the second heat radiating unit (32) to the second heat receiving unit (31).

3. The exhaust heat recovery system according to claim 2, wherein
a first valve device (25) is provided for the first return pipe (24) or the first transfer pipe (23), and
a second valve device (35) is provided for the second return pipe (34) or the second transfer pipe (33).

4. The exhaust heat recovery system according to claim 3, further comprising
a communication passage connected to the first heat radiating unit (22) and the second heat receiving unit (31), and wherein
a third valve device (37) is provided in the communication passage.

5. The exhaust heat recovery system according to claim 4, further comprising:
a controller (40) that controls the opening degrees of the first, second and third valve devices (25, 35, 37) by actuators, wherein
when it is determined that it is necessary to activate the first catalyst, the controller (40) opens the first valve device (25) and closes the second and third valve devices (35, 37), and
when it is determined that it is necessary to heat the coolant in a state where the first catalyst is activated, the controller (40) closes the first valve device (25) and opens the second and third valve devices (35, 37).

6. The exhaust heat recovery system according to claim 5, wherein
when it is determined that the temperature of the first catalyst has not reached a first catalyst upper limit temperature in a state where the first catalyst is activated and when it is determined that the temperature of the coolant has not reached a coolant upper limit temperature in a state where the coolant has been warmed up, the controller (40) closes the first valve device (25) and opens the second and third valve devices (35, 37), and
when it is determined that the temperature of the first catalyst has reached the first catalyst upper limit temperature and it is determined that the temperature of the coolant has reached the coolant upper limit temperature, the controller (40) closes the first and second valve devices (25, 35) and opens the third valve device (37).

7. The exhaust heat recovery system according to claim 2, wherein
a first valve device (25) is provided for the first return pipe (24) or the first transfer pipe (23),
a bypass pipe (61) that bypasses the second heat radiating unit (32) is connected to the second transfer pipe (33) and the second return pipe (34), and
a switching valve (62) is provided at a portion at which the bypass pipe (61) is connected to the second transfer pipe (33) and is used to switch between a heat exchange route from the second transfer pipe (33) toward the second heat radiating unit (32) and a bypass route from the second transfer pipe (33) toward the bypass pipe (61).

8. The exhaust heat recovery system according to claim 7, further comprising:
a controller (40) that controls the opening degree of the first valve device (25) by an actuator, wherein
the switching valve (62) is a three-way valve,
the controller (40) controls the switching valve (62) by an actuator for switching,
when it is determined that it is necessary to activate the first catalyst, the controller (40) opens the first valve device (25) and secures the bypass route by the switching valve (62),
when it is determined that it is necessary to heat the coolant in a state where the first catalyst is activated, the controller (40) closes the first valve device (25) and secures the heat exchange route by the switching valve (62), and
when it is determined that the temperature of the coolant has reached a coolant upper limit temperature, the controller (40) closes the first valve device (25) and secures the bypass route by the switching valve (62).

9. The exhaust heat recovery system according to claim 7, further comprising
a communication passage connected to the first heat radiating unit (22) and the second heat receiving unit (31), and wherein
a third valve device (37) is provided in the communication passage.

10. The exhaust heat recovery system according to claim 9, further comprising:
a controller (40) that controls the opening degrees of the first and third valve devices (25, 37) by actuators, wherein
the switching valve (62) is a three-way valve,
the controller (40) controls the switching valve (62) by an actuator for switching,
when it is determined that it is necessary to activate the first catalyst, the controller (40) opens the first valve device (25), closes the third valve device (37) and secures the bypass route by the switching valve (62),
when it is determined that it is necessary to heat the coolant in a state where the first catalyst is activated, the controller (40) closes the first valve device (25), opens the third valve device (37) and secures the heat exchange route by the switching valve (62), and
when it is determined that the temperature of the coolant has reached a coolant upper limit temperature, the controller (40) closes the first valve device (25), opens the third valve device (37) and secures the bypass route by the switching valve (62).

11. The exhaust heat recovery system according to claim 3 or 7, wherein
the first valve device (25) automatically controls its opening degree in accordance with a predetermined actuating condition, and the first valve device (25) opens when a condition that it is necessary to activate the first catalyst is satisfied, while the first valve device (25) closes when a condition that it is necessary to heat the coolant is satisfied in a state where the first catalyst is activated.

12. The exhaust heat recovery system according to claim 3, wherein
the second valve device (35) automatically controls its opening degree in accordance with a predetermined actuating condition, and the second valve device (35) closes when a condition that it is necessary to activate the first catalyst is satisfied, while the second valve device (35) opens when a condition that the first catalyst is activated is satisfied.

13. The exhaust heat recovery system according to claim 3, wherein
the second valve device (35) automatically controls its opening degree in accordance with a predetermined actuating condition, and the second valve device (35) closes when a condition that it is necessary to activate the first catalyst is satisfied or when it is determined that the temperature of the coolant has reached a coolant upper limit temperature, while the second valve device (35) opens when a condition that it is necessary to heat the coolant is satisfied in a state where the first catalyst is activated.

14. The exhaust heat recovery system according to claim 4 or 9, wherein
the third valve device (37) automatically controls its opening degree in accordance with a predetermined actuating condition, and the third valve device (37) closes when a condition that it is necessary to activate the first catalyst is satisfied, while the third valve device (37) opens when a condition that it is necessary to heat the coolant is satisfied in a state where the first catalyst is activated or when a condition that the temperature of the coolant has reached a coolant upper limit temperature is satisfied.

15. The exhaust heat recovery system according to claim 4, 5, 6, 9, or 10, wherein the first heat radiating unit (22) includes
a first hollow sleeve that is provided so as to surround an upstream region in the first catalyst and that has a first inner annular space, wherein the first transfer pipe (23) and the first return pipe (24) are connected to the first inner annular space and are in fluid communication with the first inner annular space, and
a radially outward-directed fin that is provided on an inner peripheral wall of the first hollow sleeve, wherein
the second heat receiving unit (31) includes
a second hollow sleeve that is provided so as to surround a downstream region in the first catalyst and that has a second inner annular space, wherein the second transfer pipe (33) and the second return pipe (34) are connected to the second inner annular space and are in fluid communication with the second inner annular space, and
a radially outward-directed fin that is provided on an inner peripheral wall of the second hollow sleeve, and wherein
the first and second hollow sleeves are connected next to each other in an axial direction thereof at a connecting portion at which the communication passage is provided.

16. The exhaust heat recovery system according to any one of claims 2 to 15, wherein
a vibration transmission damping portion (3) is provided at a location adjacent to the internal combustion engine in the exhaust passage, and
the second heat radiating unit (32) is attached in a region from the vibration transmission damping portion to the first catalyst.

17. The exhaust heat recovery system according to any one of claims 2 to 16, further comprising:
a second catalyst (6) provided downstream of the first catalyst in the exhaust passage, wherein the first heat receiving unit (21) is provided downstream of the second catalyst.

## Patentansprüche

1. Abgaswärme-Rückgewinnungssystem, aufweisend:
eine Erstkreis-Wärmeleitung (20), die eine Abgaswärme stromabwärts eines ersten Katalysators (5) in einer Abgasleitung eines Verbrennungsmotors (1) rückgewinnt und Wärme mit dem ersten Katalysator (5) austauscht; und
eine Zweitkreis-Wärmeleitung (30), die die Wärme des ersten Katalysators (5) rückgewinnt und die Wärme mit einem Kühlmittel austauscht, das von dem Verbrennungsmotor zugeführt wird.

2. Abgaswärme-Rückgewinnungssystem nach Anspruch 1, wobei
die Erstkreis-Wärmeleitung (20)
eine erste Wärmeaufnahmeeinheit (21), die ein Arbeitsmedium, das hermetisch abgedichtet ist und mit dem die erste Wärmeaufnahmeeinheit innen befüllt ist, durch eine Abgaswärme stromabwärts des ersten Katalysators in der Abgasleitung verdampft,
eine erste Wärmeabstrahlungseinheit (22), die in einem stromauf befindlichen Bereich in dem ersten Katalysator angebracht ist und die einen Wärmeaustausch zwischen dem Arbeitsmedium, das von der ersten Wärmeaufnahmeeinheit (21) übertragen wird, und dem ersten Katalysator bewirkt, um das Arbeitsmedium zu kondensieren,
eine erste Übertragungsleitung (23), die verwendet wird, um das Arbeitsmedium von der ersten Wärmeaufnahmeeinheit (21) auf die erste Wärmeabstrahlungseinheit (22) zu übertragen, und
eine erste Rückführleitung (24), die verwendet wird, um das Arbeitsmedium von der ersten Wärmeabstrahlungseinheit (22) zu der ersten Wärmeaufnahmeeinheit (21) zurückzuführen, beinhaltet, und wobei
die Zweitkreis-Wärmeleitung (30)
eine zweite Wärmeaufnahmeeinheit (31), die in einem stromabwärtigen Bereich in dem ersten Katalysator angebracht ist und die das Arbeitsmedium, das hermetisch abgedichtet ist und mit dem die zweite Wärmeaufnahmeeinheit (31) innen befüllt ist, durch die Wärme des ersten Katalysators verdampft,
eine zweite Wärmeabstrahlungseinheit (32), die einen Wärmeaustausch zwischen dem Arbeitsmedium, das von der zweiten Wärmeaufnahmeeinheit (31) übertragen wird, und einem Kühlmittel, das von dem Verbrennungsmotor zugeführt wird, bewirkt, um das Arbeitsmedium zu kondensieren,
eine zweite Übertragungsleitung (33), die verwendet wird, um das Arbeitsmedium von der zweiten Wärmeaufnahmeeinheit (31) auf die zweite Wärmeabstrahlungseinheit (32) zu übertragen, und
eine zweite Rückführleitung (34), die verwendet wird, um das Arbeitsmedium von der zweiten Wärmeabstrahlungseinheit (32) zu der zweiten Wärmeaufnahmeeinheit (31) zurückzuführen, beinhaltet.

3. Abgaswärme-Rückgewinnungssystem nach Anspruch 2, wobei
eine erste Ventilvorrichtung (25) für die erste Rückführleitung (24) oder die erste Übertragungsleitung (23) vorgesehen ist, und
eine zweite Ventilvorrichtung (35) für die zweite Rückführleitung (34) oder die zweite Übertragungsleitung (33) vorgesehen ist.

4. Abgaswärme-Rückgewinnungssystem nach Anspruch 3, ferner aufweisend:
eine Kommunikationsleitung, die mit der ersten Wärmeabstrahlungseinheit (22) und der zweiten Wärmeaufnahmeeinheit (31) verbunden ist, und wobei
eine dritte Ventilvorrichtung (37) in der Kommunikationsleitung angeordnet ist.

5. Abgaswärme-Rückgewinnungssystem nach Anspruch 4, ferner aufweisend:
einen Controller (40), der die Öffnungsgrade der ersten, zweiten und dritten Ventilvorrichtung (25, 35, 379 durch Aktoren steuert, wobei
wenn bestimmt wird, dass es notwendig ist, den ersten Katalysator zu aktivieren, der Controller (40) die erste Ventilvorrichtung (25) öffnet und die zweite und dritte Ventilvorrichtung (35, 37) schließt, und
wenn bestimmt wird, dass es notwendig ist, das Kühlmittel in einem Zustand zu erwärmen, in dem der erste Katalysator aktiviert ist, der Controller (40) die erste Ventilvorrichtung (25) schließt und die zweite und dritte Ventilvorrichtung (35, 37) öffnet.

6. Abgaswärme-Rückgewinnungssystem nach Anspruch 5, wobei
wenn bestimmt wird, dass die Temperatur des ersten Katalysators eine erste Katalysator-Temperaturobergrenze in einem Zustand nicht erreicht hat, in dem der erste Katalysator aktiviert ist, und wenn bestimmt wird, dass die Temperatur des Kühlmittels eine Kühlmittel-Temperaturobergrenze in einem Zustand nicht erreicht hat, in dem das Kühlmittel erwärmt worden ist, der Controller (40) die erste Ventilvorrichtung (25) schließt und die zweite und dritte Ventilvorrichtung (35, 37) öffnet, und
wenn bestimmt wird, dass die Temperatur des ersten Katalysators die erste Katalysator-Temperaturobergrenze erreicht hat und bestimmt wird, dass die Temperatur des Kühlmittels die Kühlmittel-Temperaturobergrenze erreicht hat, der Controller (40) die erste und die zweite Ventilvorrichtung (25, 35) schließt und die dritte Ventilvorrichtung (37) öffnet.

7. Abgaswärme-Rückgewinnungssystem nach Anspruch 2, wobei
eine erste Ventilvorrichtung (25) für die erste Rückführleitung (24) oder die erste Übertragungsleitung (23) angeordnet ist,
eine Umgehungsleitung (61), die die zweite Wärmeabstrahlungseinheit(32) umgeht, mit der zweiten Übertragungsleitung (33) und der zweiten Rückführleitung (34) verbunden ist, und
ein Schaltventil (62) an einem Bereich angeordnet ist, an dem die Umgehungsleitung (61) mit der zweiten Übertragungsleitung (33) verbunden ist und verwendet wird, um zwischen einem Wärmeaustauschweg von der zweiten Übertragungsleitung (33) zu der zweiten Wärmeabstrahlungseinheit (32) und einem Umgehungsweg von der zweiten Übertragungsleitung (33) zu der Umgehungsleitung (61) zu schalten.

8. Abgaswärme-Rückgewinnungssystem nach Anspruch 7, ferner aufweisend:
einen Controller (40), der den Öffnungsgrad der ersten Ventilvorrichtung (25) durch einen Aktor steuert, wobei
das Schaltventil (62) ein Dreiwegeventil ist,
der Controller (40) das Schaltventil (62) durch einen Aktor zum Schalten steuert,
wenn bestimmt wird, dass es notwendig ist, den ersten Katalysator zu aktivieren, der Controller (40) die erste Ventilvorrichtung (25) öffnet und den Umgehungsweg durch das Schaltventil (62) sichert,
wenn bestimmt wird, dass es notwendig ist, das Kühlmittel in einem Zustand zu erwärmen, in dem der erste Katalysator aktiviert wird, der Controller (40) die erste Ventilvorrichtung (25) schließt und den Wärmeaustauschweg durch das Schaltventil (62) sichert, und
wenn bestimmt wird, dass die Temperatur des Kühlmittels eine Kühlmittel-Temperaturobergrenze erreicht hat, der Controller (40) die erste Ventilvorrichtung (25) schließt und den Umgehungsweg durch das Schaltventil (62) sichert.

9. Abgaswärme-Rückgewinnungssystem nach Anspruch 7, ferner aufweisend:
eine Kommunikationsleitung, die mit der ersten Wärmeabstrahlungseinheit (22) und der zweiten Wärmeaufnahmeeinheit (31) verbunden ist, und wobei
eine dritte Ventilvorrichtung (37) in der Kommunikationsleitung angeordnet ist.

10. Abgaswärme-Rückgewinnungssystem nach Anspruch 9, ferner aufweisend:
einen Controller (40), der die Öffnungsgrade der ersten und der zweiten Ventilvorrichtung (25, 37) durch Aktoren steuert, wobei
das Schaltventil (62) ein Dreiwegeventil ist,
der Controller (40) das Schaltventil (62) durch einen Aktor zum Schalten steuert,
wenn bestimmt wird, dass es notwendig ist, den ersten Katalysator zu aktivieren, der Controller (40) die erste Ventilvorrichtung (25) öffnet, die dritte Ventilvorrichtung (37) schließt und den Umgehungsweg durch das Schaltventil sichert (62),
wenn bestimmt wird, dass es notwendig ist, das Kühlmittel in einem Zustand zu erwärmen, in dem der erste Katalysator aktiviert ist, der Controller (40) die erste Ventilvorrichtung (25) schließt, die dritte Ventilvorrichtung (37) öffnet und den Wärmeaustauschweg durch das Schaltventil (62) sichert, und
wenn bestimmt wird, dass die Temperatur des Kühlmittels eine Kühlmittel-Temperaturobergrenze erreicht hat, der Controller (40) die erste Ventilvorrichtung (25) schließt, die dritte Ventilvorrichtung (37) öffnet und den Umgehungsweg durch das Schaltventil (62) sichert.

11. Abgaswärme-Rückgewinnungssystem nach Anspruch 3 oder 7, wobei
die erste Ventilvorrichtung (25) ihren Öffnungsgrad gemäß einer vorbestimmten Betätigungsbedingung automatisch steuert, und die erste Ventilvorrichtung (25) sich öffnet, wenn eine Bedingung, dass es notwendig ist, den ersten Katalysator zu aktivieren, erfüllt ist, während die erste Ventilvorrichtung (25) sich schließt, wenn eine Bedingung, dass es notwendig ist, das Kühlmittel zu erwärmen, in einem Zustand erfüllt ist, in dem der erste Katalysator aktiviert ist.

12. Abgaswärme-Rückgewinnungssystem nach Anspruch 3, wobei
die zweite Ventilvorrichtung (35) ihren Öffnungsgrad gemäß einer vorbestimmten Betätigungsbedingung automatisch steuert, und die zweite Ventilvorrichtung (35) sich schließt, wenn eine Bedingung, dass es notwendig ist, den ersten Katalysator zu aktivieren, erfüllt ist, während die zweite Ventilvorrichtung (35) sich öffnet, wenn eine Bedingung, dass der erste Katalysator aktiviert ist, erfüllt ist.

13. Abgaswärme-Rückgewinnungssystem nach Anspruch 3, wobei
die zweite Ventilvorrichtung (35) ihren Öffnungsgrad gemäß einer vorbestimmten Betätigungsbedingung automatisch steuert, und die zweite Ventilvorrichtung (35) sich schließt, wenn eine Bedingung, dass es notwendig ist, den ersten Katalysator zu aktivieren, erfüllt ist, oder wenn bestimmt wird, dass die Temperatur des Kühlmittels eine Kühlmitteltemperatur-Obergrenze erreicht hat, während die zweite Ventilvorrichtung (35) sich öffnet, wenn eine Bedingung, dass es notwendig ist, das Kühlmittel zu erwärmen, in einem Zustand erfüllt ist, in dem der erste Katalysatoraktiviert ist.

14. Abgaswärme-Rückgewinnungssystem nach Anspruch 4 oder 9, wobei
die dritte Ventilvorrichtung (37) ihren Öffnungsgrad gemäß einer vorbestimmten Betätigungsbedingung automatisch steuert, und die dritte Ventilvorrichtung (37) sich schließt, wenn eine Bedingung, dass es notwendig ist, den ersten Katalysator zu aktivieren, erfüllt ist, während die dritte Ventilvorrichtung (37) sich öffnet, wenn eine Bedingung, dass es notwendig ist, das Kühlmittel zu erwärmen, in einem Zustand erfüllt ist, in dem der erste Katalysator aktiviert ist, oder wenn eine Bedingung, dass die Temperatur des Kühlmittels eine Kühlmitteltemperatur-Obergrenze erreicht hat, erfüllt ist.

15. Abgaswärme-Rückgewinnungssystem nach Anspruch 4, 5, 6, 9 oder 10, wobei
die erste Wärmeabstrahlungseinheit (22)
eine erste Hohlmuffe, die so angeordnet ist, dass sie einen stromauf befindlichen Bereich in dem ersten Katalysator umgibt, und die einen ersten inneren ringförmigen Raum aufweist, wobei die erste Übertragungsleitung (23) und die erste Rückführleitung (24) mit dem ersten inneren ringförmigen Raum verbunden sind und mit dem ersten inneren ringförmigen Raum in Fluidverbindung sind, und eine radial nach außen gerichtete Lamelle, die auf einer inneren Umfangswand der ersten Hohlmuffe angeordnet ist, beinhaltet, wobei
die zweite Wärmeaufnahmeeinheit (31)
eine zweite Hohlmuffe, die so angeordnet ist, dass sie einen stromabwärtigen Bereich in dem ersten Katalysator umgibt, und die einen zweiten inneren ringförmigen Raum aufweist, wobei die zweite Übertragungsleitung (33) und die zweite Rückführleitung (24) mit dem zweiten inneren ringförmigen Raum verbunden sind und mit dem zweiten inneren ringförmigen Raum in Fluidverbindung sind, und
eine radial nach außen gerichtete Lamelle, die auf einer inneren Umfangswand der zweiten Hohlmuffe angeordnet ist, beinhaltet, und wobei
die erste und die zweite Hohlmuffe nebeneinander in einer axialen Richtung derselben an einem Verbindungsbereich verbunden sind, an dem die Kommunikationsleitung angeordnet ist.

16. Abgaswärme-Rückgewinnungssystem nach einem der Ansprüche 2 bis 15, wobei
ein Vibrationsübertragungs-Dämpfungsbereich (3) an einer Stelle neben dem Verbrennungsmotor in der Abgasleitung angeordnet ist, und
die zweite Wärmeabstrahlungseinheit (32) in einem Bereich von dem Vibrationsübertragungs-Dämpfungsbereich mit dem ersten Katalysator angebracht ist.

17. Abgaswänme-Rückgewinnungssystem nach einem der Ansprüche 2 bis 16, ferner aufweisend:
einen zweiten Katalysator (6), der stromabwärts des ersten Katalysators in der Abgasleitung angeordnet ist, wobei die erste Wärmeaufnahmeeinheit (21) stromabwärts des zweiten Katalysators angeordnet ist.

## Revendications

1. Système de récupération de la chaleur des gaz d'échappement comprenant :
un premier caloduc (20) en boucle qui récupère la chaleur des gaz d'échappement en aval d'un premier catalyseur (5) dans un passage d'échappement d'un moteur à combustion interne (1) et qui échange de chaleur avec le premier catalyseur (5) ; et
un deuxième caloduc (30) en boucle qui récupère la chaleur du premier catalyseur (5) et qui l'échange avec un fluide de refroidissement qui est délivré par le moteur à combustion interne.

2. Système de récupération de la chaleur des gaz d'échappement selon la revendication 1, dans lequel
le premier caloduc (20) en boucle comporte
une première unité (21) de réception de chaleur qui vaporise un fluide de travail, qui est hermétiquement isolé et remplit dans la première unité de réception de chaleur, par la chaleur des gaz d'échappement en aval du premier catalyseur dans le passage d'échappement,
une première unité (22) de radiation de chaleur qui est fixée dans une région amont dans le premier catalyseur et qui entraîne un échange thermique entre le fluide de travail, transféré de la première unité (21) de réception de chaleur, et le premier catalyseur afin de condenser le fluide de travail,
un premier tuyau de transfert (23) qui est utilisé pour transférer le fluide de travail de la première unité (21) de réception de chaleur à la première unité (22) de radiation de chaleur, et
un premier tuyau de retour (24) qui est utilisé pour renvoyer le fluide de travail de la première unité (22) de radiation de chaleur à la première unité (21) de réception de chaleur, et dans lequel
le deuxième caloduc (30) en boucle comporte
une deuxième unité (31) de réception de chaleur qui est fixée dans une région aval dans le premier catalyseur et qui vaporise un fluide de travail, qui est hermétiquement isolé et remplit dans la deuxième unité (31) de réception de chaleur, par la chaleur du premier catalyseur,
une deuxième unité (32) de radiation de chaleur qui entraîne un échange thermique entre le fluide de travail, transféré de la deuxième unité (31) de réception de chaleur, et le fluide de refroidissement, délivré par le moteur à combustion interne, afin de condenser le fluide de travail,
un deuxième tuyau de transfert (33) qui est utilisé pour transférer le fluide de travail de la deuxième unité (31) de réception de chaleur à la deuxième unité (32) de radiation de chaleur, et
un deuxième tuyau de retour (34) qui est utilisé pour renvoyer le fluide de travail de la deuxième unité (32) de radiation de chaleur à la deuxième unité (31) de réception de chaleur.

3. Système de récupération de la chaleur des gaz d'échappement selon la revendication 2, dans lequel
un premier dispositif (25) de soupape est prévu pour le premier tuyau de retour (24) ou pour le premier tuyau de transfert (23), et
un deuxième dispositif (35) de soupape est prévu pour le deuxième tuyau de retour (34) ou pour le deuxième tuyau de transfert (33).

4. Système de récupération de la chaleur des gaz d'échappement selon la revendication 3, comprenant en outre
un passage de communication relié à la première unité (22) de radiation de chaleur et à la deuxième unité (31) de réception de chaleur, et dans lequel
un troisième dispositif (37) de soupape est prévu dans le passage de communication.

5. Système de récupération de la chaleur des gaz d'échappement selon la revendication 4, comprenant en outre
une unité de commande (40) qui commande les degrés d'ouverture des premier, deuxième et troisième dispositifs (25, 35, 37) de soupape par des actionneurs, et dans lequel
lorsqu'on détermine qu'il est nécessaire d'activer le premier catalyseur, l'unité de commande (40) ouvre le premier dispositif (25) de soupape et ferme les deuxième et troisième dispositifs (35, 37) de soupape, et
lorsqu'on détermine qu'il est nécessaire de chauffer le fluide de refroidissement dans un état où le premier catalyseur est activé, l'unité de commande (40) ferme le premier dispositif (25) de soupape et ouvre les deuxième et troisième dispositifs (35, 37) de soupape.

6. Système de récupération de la chaleur des gaz d'échappement selon la revendication 5, dans lequel
lorsqu'on détermine que la température du premier catalyseur n'a pas atteint une première température limite supérieure de catalyseur dans un état où le premier catalyseur est activé et lorsqu'on détermine que la température du fluide de refroidissement n'a pas atteint une température limite supérieure de refroidissement dans un état où le fluide de refroidissement a été réchauffé, l'unité de commande (40) ferme le premier dispositif (25) de soupape et ouvre les deuxième et troisième dispositifs (35, 37) de soupape, et
lorsqu'on détermine que la température du premier catalyseur a atteint la première température limite supérieure de catalyseur et que la température du fluide de refroidissement a atteint la température limite supérieure de refroidissement, l'unité de commande (40) ferme les premier et deuxième dispositifs (25, 35) de soupape et ouvre le troisième dispositif (37) de soupape.

7. Système de récupération de la chaleur des gaz d'échappement selon la revendication 2, dans lequel
un premier dispositif (25) de soupape est prévu pour le premier tuyau de retour (24) ou pour le premier tuyau de transfert (23),
un tuyau de dérivation (61) qui contourne la deuxième unité (32) de radiation de chaleur est relié au deuxième tuyau de transfert (33) et au deuxième tuyau de retour (34), et
une soupape de commutation (62) est prévue au niveau d'une partie à laquelle le tuyau de dérivation (61) est relié au deuxième tuyau de transfert (33) et est utilisée pour basculer entre une voie d'échange thermique qui s'étend du deuxième tuyau de transfert (33) vers la deuxième unité (32) de radiation de chaleur et une voie de dérivation qui s'étend du deuxième tuyau de transfert (33) vers le tuyau de dérivation (61).

8. Système de récupération de la chaleur des gaz d'échappement selon la revendication 7, comprenant en outre :
une unité de commande (40) qui commande le degré d'ouverture du premier dispositif (25) de soupape par un actionneur, où
la soupape de commutation (62) est une soupape à trois voies,
l'unité de commande (40) commande la soupape de commutation (62) par un actionneur pour effectuer la commutation,
lorsqu'on détermine qu'il est nécessaire d'activer le premier catalyseur, l'unité de commande (40) ouvre le premier dispositif (25) de soupape et fixe la voie de dérivation par la soupape de commutation (62),
lorsqu'on détermine qu'il est nécessaire de chauffer le fluide de refroidissement dans un état où le premier catalyseur est activé, l'unité de commande (40) ferme le premier dispositif (25) de soupape et fixe la voie d'échange thermique par la soupape de commutation (62), et
lorsqu'on détermine que la température du fluide de refroidissement a atteint une température limite supérieure de refroidissement, l'unité de commande (40) ferme le premier dispositif (25) de soupape et fixe la voie de dérivation par la soupape de commutation (62).

9. Système de récupération de la chaleur des gaz d'échappement selon la revendication 7, comprenant en outre
un passage de communication relié à la première unité (22) de radiation de chaleur et à la deuxième unité (31) de réception de chaleur, et où
un troisième dispositif (37) de soupape est prévu dans le passage de communication.

10. Système de récupération de la chaleur des gaz d'échappement selon la revendication 9, comprenant en outre
une unité de commande (40) qui commande les degrés d'ouverture des premier et troisième dispositifs (25, 37) de soupape par des actionneurs, où
la soupape de commutation (62) est une soupape à trois voies,
l'unité de commande (40) commande la soupape de commutation (62) par un actionneur pour effectuer la commutation,
lorsqu'on détermine qu'il est nécessaire d'activer le premier catalyseur, l'unité de commande (40) ouvre le premier dispositif (25) de soupape, ferme le troisième dispositif (37) de soupape et fixe la voie de dérivation par la soupape de commutation (62),
lorsqu'on détermine qu'il est nécessaire de chauffer le fluide de refroidissement dans un état où le premier catalyseur est activé, l'unité de commande (40) ferme le premier dispositif (25) de soupape, ouvre le troisième dispositif (37) de soupape et fixe la voie d'échange thermique par la soupape de commutation (62), et
lorsqu'on détermine que la température du fluide de refroidissement a atteint une température limite supérieure de refroidissement, l'unité de commande (40) ferme le premier dispositif (25) de soupape, ouvre le troisième dispositif (37) de soupape et fixe la voie de dérivation par la soupape de commutation (62).

11. Système de récupération de la chaleur des gaz d'échappement selon la revendication 3 ou 7, dans lequel
le premier dispositif (25) de soupape commande automatiquement son degré d'ouverture en fonction d'une condition d'actionnement prédéterminée, et le premier dispositif (25) de soupape s'ouvre lorsqu'une condition où il est nécessaire d'activer le premier catalyseur est satisfaite, tandis que le premier dispositif (25) de soupape se ferme lorsqu'une condition où il est nécessaire de chauffer le fluide de refroidissement est satisfaite dans un état où le premier catalyseur est activé.

12. Système de récupération de la chaleur des gaz d'échappement selon la revendication 3, dans lequel
le deuxième dispositif (35) de soupape commande automatiquement son degré d'ouverture en fonction d'une condition d'actionnement prédéterminée, et le deuxième dispositif (35) de soupape se ferme lorsqu'une condition où il est nécessaire d'activer le premier catalyseur est satisfaite, tandis que le deuxième dispositif (35) de soupape s'ouvre lorsqu'une condition où le premier catalyseur est activé est satisfaite.

13. Système de récupération de la chaleur des gaz d'échappement selon la revendication 3, dans lequel
le deuxième dispositif (35) de soupape commande automatiquement son degré d'ouverture en fonction d'une condition d'actionnement prédéterminée, et le deuxième dispositif (35) de soupape se ferme lorsqu'une condition où il est nécessaire d'activer le premier catalyseur est satisfaite ou lorsqu'on détermine que la température du fluide de refroidissement a atteint une température limite supérieure de refroidissement, tandis que le deuxième dispositif (35) de soupape s'ouvre lorsqu'une condition où il est nécessaire de chauffer le fluide de refroidissement est satisfaite dans un état où le premier catalyseur est activé.

14. Système de récupération de la chaleur des gaz d'échappement selon la revendication 4 ou 9, dans lequel
le troisième dispositif (37) de soupape commande automatiquement son degré d'ouverture en fonction d'une condition d'actionnement prédéterminée, et le troisième dispositif (37) de soupape se ferme lorsqu'une condition où il est nécessaire d'activer le premier catalyseur est satisfaite, tandis que le troisième dispositif (37) de soupape s'ouvre lorsqu'une condition où il est nécessaire de chauffer le fluide de refroidissement est satisfaite dans un état où le premier catalyseur est activé ou lorsqu'une condition où la température du fluide de refroidissement a atteint une température limite supérieure de refroidissement est satisfaite.

15. Système de récupération de la chaleur des gaz d'échappement selon la revendication 4, 5, 6, 9, ou 10, dans lequel
la première unité (22) de radiation de chaleur comporte
un premier manchon creux qui est prévu de manière à entourer une région amont dans le premier catalyseur et qui possède un premier espace annulaire interne, où le premier tuyau de transfert (23) et le premier tuyau de retour (24) sont reliés au premier espace annulaire interne et sont en communication fluidique avec le premier espace annulaire interne, et
une ailette dirigée radialement vers l'extérieur qui est prévue sur une paroi périphérique interne du premier manchon creux, où
la deuxième unité (31) de réception de chaleur comporte
un deuxième manchon creux qui est prévu de manière à entourer une région aval dans le premier catalyseur et qui possède un deuxième espace annulaire interne, où le deuxième tuyau de transfert (33) et le deuxième tuyau de retour (34) sont reliés au deuxième espace annulaire interne et sont en communication fluidique avec le deuxième espace annulaire interne, et
une ailette dirigée radialement vers l'extérieur qui est prévue sur une paroi périphérique interne du deuxième manchon creux, et où
les premier et deuxième manchons creux sont reliés l'un à côté de l'autre dans leurs direction axiale au niveau d'une partie de connexion à laquelle est prévu le passage de communication.

16. Système de récupération de la chaleur des gaz d'échappement selon l'une quelconque des revendications 2 à 15, dans lequel une partie (3) d'amortissement de transmission de vibrations est prévue à un emplacement adjacent au moteur à combustion interne dans le passage d'échappement, et
la deuxième unité (32) de radiation de chaleur est fixée dans une région qui s'étend de la partie d'amortissement de transmission de vibrations au premier catalyseur.

17. Système de récupération de la chaleur des gaz d'échappement selon l'une quelconque des revendications 2 à 16, comprenant en outre :
un deuxième catalyseur (6) prévu en aval du premier catalyseur dans le passage d'échappement, où la première unité (21) de réception de chaleur est prévue en aval du deuxième catalyseur.
